(19) **Europäisches Patentamt European Patent Office Office européen des brevets**

(11) **EP 4 534 625 A1**

(12) **EUROPEAN PATENT APPLICATION**
published in accordance with Art. 153(4) EPC

(43) Date of publication:
09.04.2025 Bulletin 2025/15

(21) Application number: 23815722.6

(22) Date of filing: 12.05.2023

(51) International Patent Classification (IPC):
$C09J\ 169/00^{(2006.01)}$   $B32B\ 27/00^{(2006.01)}$
$B32B\ 27/26^{(2006.01)}$   $B32B\ 27/40^{(2006.01)}$
$C08G\ 64/00^{(2006.01)}$   $C08G\ 65/28^{(2006.01)}$
$C08G\ 65/336^{(2006.01)}$   $C09J\ 171/02^{(2006.01)}$

(52) Cooperative Patent Classification (CPC):
B32B 27/00; B32B 27/26; B32B 27/40;
C08G 64/00; C08G 65/26; C08G 65/336;
C09J 169/00; C09J 171/02

(86) International application number:
PCT/JP2023/017825

(87) International publication number:
WO 2023/233962 (07.12.2023 Gazette 2023/49)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 03.06.2022 JP 2022091143

(71) Applicant: AGC INC.
Chiyoda-ku,
Tokyo 1008405 (JP)

(72) Inventors:
• FUJISAKI Shogo
Tokyo 100-8405 (JP)

• SHIMOMA Hitoshi
Tokyo 100-8405 (JP)
• LIU Xuhui
Tokyo 100-8405 (JP)
• ITO Takashi
Tokyo 100-8405 (JP)
• SUNAYAMA Yoshitaka
Tokyo 100-8405 (JP)
• NAKAMURA Makito
Tokyo 100-8405 (JP)

(74) Representative: Müller-Boré & Partner
Patentanwälte PartG mbB
Friedenheimer Brücke 21
80639 München (DE)

(54) **ADHESIVE COMPOSITION AND ARTICLE**

(57) The present invention provides an adhesive composition excellent in adhesiveness to resin materials, and an article containing a cured product of the adhesive composition. The adhesive composition of the present invention includes a polyether polycarbonate diol that has a number average molecular weight of 500 to 10000, and has no specific reactive silicon group, or a polyether polycarbonate polymer (A) having the specific reactive silicon group.

EP 4 534 625 A1

**Description**

Technical Field

The present invention relates to an adhesive composition, and to an article including a cured product of the adhesive composition.

Background Art

In the automobile field, while the increase in environmental awareness and the trend toward no gasoline advance, weight reduction is required as a fuel consumption improvement measure. Steel plates are generally used for the interior and exterior articles, such as bodies, front doors, front bumpers, of automobiles, but in order to meet the demand for weight reduction, the number of cases increases where instead of steel plates, reinforced plastics such as carbon fiber-reinforced plastics and glass fiber-reinforced plastics, and various types of resin materials including polypropylene are used as the interior and exterior parts of automobiles.

In order to bond such a resin material to a different material such as glass, it has been general to subject the resin material to flame treatment and then bond the resin material thereto with the use of a primer.

However, the primer contains a large amount of solvent, and therefore, there has been a problem that the primer has an adverse effect on the environment. In order to solve such a problem, it has been demanded for an adhesive composition to have improved adhesiveness to resin materials without using a primer.

For example, in Patent Literature 1, a curable material is disclosed that includes a polyether polycarbonate polymer having a reactive silicon group, and a cured product of the curable material is said to have satisfactory strength and elongation.

In addition, in Patent Literature 2, a polyurethane resin is disclosed that has a unit based on a polyoxyalkylene diol and a unit based on a diisocyanate compound having a molecular weight of 120 to 400, and is said to be excellent in low-temperature characteristics and transparency while having strength characteristics.

Citation List

Patent Literature

Patent Literature 1: JP 2021-59722 Patent Literature 2: JP 2021-155705

Summary of Invention

Technical Problem

However, in Patent Literature 1 and Patent Literature 2, the adhesiveness to resin materials has not been examined.

The present invention has been made in view of such circumstances, and an object thereof is to provide an adhesive composition that is excellent in the adhesiveness to resin materials, and an article including a cured product of the adhesive composition.

Solution to Problem

The present inventors have conducted intensive studies to solve the problems; as a result, have found that an adhesive composition can solve the problems which contains a polyether polycarbonate diol that has a number average molecular weight in a specific range and has no specific reactive silicon group, or a polyether polycarbonate polymer having a specific reactive silicon group; and have completed the present invention.

Specifically, the present invention is as follows.

[1] An adhesive composition including a polyether polycarbonate diol that has a number average molecular weight of 500 to 10000, and has no reactive silicon group represented by the following formula (1), or a polyether polycarbonate polymer (A) having the reactive silicon group represented by the following formula (1):

$$-SiX_aR_{3-a} \qquad \text{Formula (1),}$$

wherein, in the formula (1), X is a halogen atom, a hydroxyl group or a hydrolyzable group; R is a monovalent organic group having 1 to 20 carbon atoms, and contains no hydrolyzable group; a is an integer of 1 to 3; and when a is 1, two R may be the same as or different from each other, and when a is 2 or 3, a plurality of X may be the same as or different from each other.

[2] The adhesive composition according to the above [1], including: a main agent containing an isocyanate group-terminated urethane prepolymer; and a curing agent containing the polyether polycarbonate diol that has no reactive silicon group represented by the formula (1).

[3] The adhesive composition according to the above [1] or [2], wherein the polyether polycarbonate diol that has no reactive silicon group represented by the formula (1) is a ring-opened polymer of a polycarbonate diol and a cyclic ether, and has carbonate group and oxyalkylene group, and the polycarbonate diol is a condensate of two or more alcohols and a carbonate compound.

[4] The adhesive composition according to any one of the above [1] to [3], wherein a content of the carbonate group in the polyether polycarbonate diol that has no reactive silicon group represented by the formula (1) is 5% by mass or more based on 100% by mass of a total of the carbonate group and the oxyalkylene group.

[5] The adhesive composition according to any one of the above [1] to [4], wherein the oxyalkylene group in the polyether polycarbonate diol that has no reactive silicon group represented by the formula (1) is at least one selected from the group consisting of an oxypropylene group and an oxyethylene group.

[6] The adhesive composition according to any one of the above [1] to [5], wherein the polyether polycarbonate diol that has no reactive silicon group represented by the formula (1) is a compound represented by the following formula (2):

$$HO\text{-}(R^1O)_s\text{-}(R^2\text{-}O\text{-}C(=O)\text{-}O)_u\text{-}R^{20}\text{-}(OR^1)_t\text{-}OH \qquad \text{Formula (2),}$$

wherein, in the formula (2), $R^1$ is an alkylene group having 2 to 4 carbon atoms; $R^2$ and $R^{20}$ are each a chain hydrocarbon group having 3 to 20 carbon atoms or a cyclic hydrocarbon group having a ring structure that has carbon atoms of 6 to 20; these groups may have one or more substituent groups, when being a cyclic hydrocarbon group, may contain an oxygen atom as an atom constituting the ring, and when containing an oxygen atom, adjacent atoms are simultaneously not an oxygen atom; and s and t are each a repeating number, u is a repeating number of 2 or more, and $(R^2\text{-}O\text{-}C(=O)\text{-}O)_u$ includes two or more units represented by $(R^2\text{-}O\text{-}C(=O)\text{-}O)$.

[7] The adhesive composition according to the above [1], wherein the polyether polycarbonate polymer (A) having the reactive silicon group represented by the formula (1) has two or more terminal groups in one molecule; and the terminal group is at least one group selected from the group consisting of the reactive silicon group represented by the formula (1), an active hydrogen-containing group, and an isocyanate group.

[8] The adhesive composition according to the above [7], wherein the polyether polycarbonate polymer (A) having the reactive silicon group represented by the formula (1) has a number average molecular weight of 800 to 3500.

[9] The adhesive composition according to the above [7] or [8], further including an oxyalkylene polymer (B).

[10] The adhesive composition according to the above [9], wherein the oxyalkylene polymer (B) has a number average molecular weight of 5000 to 50000.

[11] An article including a first substrate material, a cured product of the adhesive composition according to any one of the above [1] to [10], and a second substrate material in this order, wherein at least one of the first substrate material and the second substrate material is formed from a resin material.

[12] The article according to the above [11], wherein the resin material is a polyolefin.

[13] The article according to the above [11], wherein the resin material is polypropylene.

[14] The article according to any one of the above [11] to [13], wherein a surface of at least one of the first substrate material and the second substrate material is plasma-treated, which is in contact with the cured product of the adhesive composition.

Advantageous Effects of Invention

According to the present invention, it is possible to provide an adhesive composition excellent in the adhesiveness to resin materials, and an article including a cured product of the adhesive composition.

Brief Description of the Drawing

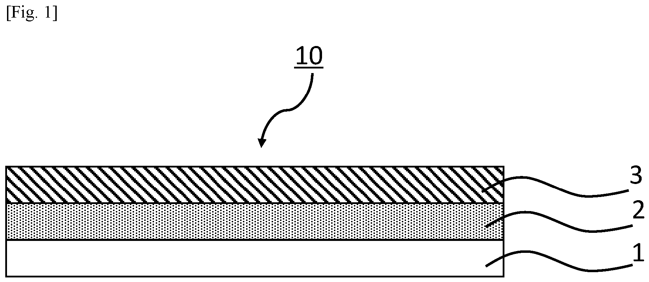

[Fig. 1] Fig. 1 is a cross-sectional view showing one embodiment of an article of the present invention.

Description of Embodiments

The definitions and meanings of terms and notations which are used in the present specification are as follows.

As used herein, ones considered preferred can be optionally adopted, and it can be said that combinations of preferred ones are more preferred.

As used herein, the description of "XX to YY" means "XX or more and YY or less". As used herein, for preferred numerical value ranges (for example, ranges of content), lower limit values and upper limit values described stepwise can each be independently combined. For example, from the description of "preferably 10 to 90, more preferably 30 to 60", "the preferred lower limit value (10)" and "the more preferred upper limit value (60)" can also be combined into "10 to 60". In the numerical value ranges described herein, the upper limit values or lower limit values of the numerical value ranges may be replaced by values shown in Examples.

In the present specification, a "condensate" means a "condensate obtained by condensation polymerization by a transesterification reaction".

A "unit" constituting the polymer means an atomic group formed by polymerization of a monomer.

The "oxyalkylene polymer" refers to a polymer having an oxyalkylene group.

The "isocyanate group-terminated urethane prepolymer" refers to a compound having an isocyanate group at least at a part of the terminals of the molecular chain, which is obtained by reacting a polyisocyanate compound with a compound having two or more active hydrogen-containing groups in one molecule so that the isocyanate group becomes excessive with respect to the active hydrogen-containing groups.

A terminal group in the polyether polycarbonate diol means an atomic group which contains an oxygen atom closest to the molecular terminal, among oxygen atoms in a main chain of the polymer.

The terminal group in the polyether polycarbonate polymer containing the reactive silicon group means an atomic group containing an oxygen atom closest to the molecular terminal, among oxygen atoms in the main chain of the polymer.

A terminal group in the oxyalkylene polymer means an atomic group containing an oxygen atom closest to the molecular terminal, among oxygen atoms in the polyoxyalkylene chain.

<Adhesive Composition>

The adhesive composition of the present invention includes a polyether polycarbonate diol that has a number average molecular weight of 500 to 10000, and has no reactive silicon group represented by the following formula (1), or a polyether polycarbonate polymer (A) having the reactive silicon group represented by the following formula (1):

$$-SiX_aR_{3-a} \qquad \text{Formula (1),}$$

wherein, in the formula (1), X is a halogen atom, a hydroxyl group or a hydrolyzable group; R is a monovalent organic group having 1 to 20 carbon atoms, and contains no hydrolyzable group; a is an integer of 1 to 3; and when a is 1, two R may be the same as or different from each other, and when a is 2 or 3, a plurality of X may be the same as or different from each other.

The adhesive composition of the present invention includes a polyether polycarbonate diol having no reactive silicon group represented by the above formula (1) (hereinafter, also simply referred to as a polyether polycarbonate diol), or alternatively includes a polyether polycarbonate polymer (A) having the reactive silicon group represented by the above formula (1) (hereinafter, also simply referred to as a polyether polycarbonate polymer (A) having the reactive silicon group): and thereby is excellent in the adhesiveness to resin materials.

(Polyether Polycarbonate Diol)

The number average molecular weight (Mn) of the polyether polycarbonate diol is 500 to 10000, preferably 500 to 5000, more preferably 500 to 4000, further preferably 500 to 3000, and particularly preferably 700 to 2500. When the Mn of the polyether polycarbonate diol is greater than or equal to the lower limit value, improved strength and elongation at break of cured resin using above polyether polycarbonate diol is achieved, and when the Mn is less than or equal to the upper limit value, the adhesiveness to resin materials becomes satisfactory, the viscosity becomes low, and the handling becomes easy.

An Mw/Mn of the polyether polycarbonate diol is preferably 1.0 to 3.0, more preferably 1.0 to 2.5, and further preferably 1.0 to 2.0. When the Mw/Mn of the polyether polycarbonate diol is less than or equal to the upper limit value, the ratio of high molecular weight component which increases viscosity will drop; and thereby the viscosity decreases, and the handling of the composition becomes easy.

The number average molecular weight (Mn) and weight average molecular weight (Mw) of the polyether polycarbonate diol are molecular weights conversion using polystyrene standard, which are measured by using gel permeation chromatography (GPC) according to a method described in Examples later, and by preparing a calibration curve with the use of a standard polystyrene sample having a known molecular weight.

A hydroxyl value of the polyether polycarbonate diol is preferably 40 mgKOH/g or higher, more preferably 45 mgKOH/g or higher, and particularly preferably 50 mgKOH/g or higher; and is also preferably 500 mgKOH/g or lower, more preferably 300 mgKOH/g or lower, and particularly preferably 200 mgKOH/g or lower. When the hydroxyl value of the polyether polycarbonate diol is the lower limit value or higher, the viscosity becomes easy to handle, and when the hydroxyl value is less than or equal to the upper limit value, the strength and elongation at break of the cured product are further enhanced.

The hydroxyl value of the polyether polycarbonate diol is a value calculated by a method which uses an acetylating agent in accordance with JIS K1557: 2007.

The viscosity of the polyether polycarbonate diol at 25°C is preferably 3000 mPa·s or lower, more preferably 2000 mPa·s or lower, and further preferably 1000 mPa·s or lower, from the viewpoint of improving workability in mixing the composition.

The viscosity of the polyether polycarbonate diol at 25°C is a value measured with the use of an E-type viscometer. Specifically, the viscosity is measured by a method described in Examples later.

It is preferable that the polyether polycarbonate diol be a ring-opened polymer obtained by ring-opening polymerization of a polycarbonate diol and a cyclic ether which will be described later, from the viewpoint of further improving the adhesiveness to resin materials. It is preferable that the polyether polycarbonate diol is a diol having carbonate group and oxyalkylene group.

The oxyalkylene group in the polyether polycarbonate diol, from the viewpoint of further improving adhesiveness to resin materials, lowering the cost, and facilitating procurement, is preferable to be at least one selected from the group consisting of oxypropylene group and oxyethylene group, and is more preferable to be oxypropylene group.

A content of the carbonate group in the polyether polycarbonate diol is preferably 5% by mass or more, more preferably 8% by mass or more, and further preferably 12% by mass or more, based on 100% by mass of the total of the carbonate group and the oxyalkylene group, from the viewpoint of further improving the adhesiveness to resin materials. The upper limit value of the content of the carbonate group is preferably 22% by mass or less, more preferably 20% by mass or less, and further preferably 18% by mass or less, from the viewpoint of reducing the intermolecular bonding of the carbonate group to lower the viscosity, facilitating the handling of the composition, and improving the compatibility with other polymers.

The content of the carbonate group is a value calculated on the basis of a method described in Examples later.

[Polycarbonate Diol]

It is preferable that the polycarbonate diol be a condensate of two or more alcohols and a carbonate compound, from the viewpoint of being able to suppress crystallization at room temperature (23°C) and being able to suppress phase separation during cyclic ether addition.

Examples of the alcohols include diols having no side chain such as ethylene glycol, 1,3-propanediol, 1,4-butanediol (1,4-BD), 1,5-pentanediol (1,5-PD), 1,6-hexanediol (1,6-HD) 1,7-heptanediol, 1,8-octanediol, 1,9-nonanediol, 1,10-decanediol, 1,11-undecanediol, 1,12-dodecanediol, 1,13-tridecanediol, 1,14-tetradecanediol, 1,16-hexadecanediol, 1,18-octadecanediol and 1,20-eicosanediol; diols having a side chain such as 2-methyl-1,8-octanediol, 2, 2-dimethyl-1,3-propanediol, 2-ethyl-1,3-hexanediol, 2-ethyl-1,6-hexanediol, 2-methyl-1,4-butanediol, 2-methyl-1,3-propanediol, 3-methyl-1,5-pentanediol, 2,4-dimethyl-1,5-pentanediol and 2,4-diethyl-1,5-pentanediol; cyclic diols such as 1,3-cyclohexanediol, 1,3-cyclohexanedimethanol, 1,4-cyclohexanediol, 1,4-cyclohexanedimethanol, isosorbide, 2-bis(4-hydroxycyclohexyl)-propane, 2,7-norbornanediol, 2,3-norbornanediol, tetrahydrofuran-2,2-dimethanol, 2,5-bis(hydroxymethyl)-1,4-dioxane and 5,5-bis(hydroxymethyl)-2-phenyl-1,3-dioxane; and diols having an aromatic ring such as p-xylene glycol, p-tetrachloroxylenediol, 1,4-bis(hydroxyethoxy)benzene, 2,2-bis[(4-hydroxyethoxy)phenyl] propane. These alcohols may be used alone, or in combination of two or more types.

Among these alcohols, it is preferable to be 1,5-pentanediol, 1,6-hexanediol, 1,9-nonanediol, 2-methyl-1,8-octanediol, 1,4-butanediol, and 2-methyl-1,3-propanediol, and is more preferable to be 1,5-pentanediol and 1,6-hexanediol, from the viewpoint of suppressing phase separation and further enhancing the breaking strength and the breaking elongation of the cured product.

Examples of the carbonate compound include dimethyl carbonate, diethyl carbonate, dipropyl carbonate, dibutyl carbonate, diphenyl carbonate, ethylene carbonate, trimethylene carbonate, propylene carbonate, 1,2-butylene carbonate and neopentylene carbonate. These carbonate compounds may be used alone, or in combination of two or more types.

Among these carbonate compounds, it is preferable to be dimethyl carbonate, diethyl carbonate, diphenyl carbonate, and ethylene carbonate, from the viewpoint of reactivity with the alcohols and the cyclic ethers.

[Cyclic Ether]

Examples of the cyclic ether include cyclic ethers having two carbon atoms which form the ring, such as ethylene oxide (hereinafter, referred to as "EO" in some cases), propylene oxide (hereinafter, referred to as "PO" in some cases), 1,2-butylene oxide and 2,3-butylene oxide; cyclic ethers having 3 carbon atoms which form the ring, such as oxetane; and cyclic ethers having 4 carbon atoms which form the ring, such as tetramethylene oxide. The cyclic ether may have a substituent group. Among these cyclic ethers, such cyclic ethers are preferable as to have two carbon atoms which form the ring and may have a substituent group; such cyclic ethers are more preferable that a total of carbon atoms in the substituent group and carbon atoms constituting the ring are 2 to 8 atoms; such cyclic ethers are further preferable that carbon atoms which form the ring are two carbon atoms, such as ethylene oxide, propylene oxide, 1,2-butylene oxide and 2,3-butylene oxide; and ethylene oxide or propylene oxide is particularly preferable.

These cyclic ethers may be used alone, or in combination of two or more types.

It is more preferable that the polyether polycarbonate diol be a compound represented by the following formula (2), from the viewpoint of further improving the adhesiveness to resin materials:

$$HO\text{-}(R^1O)_s\text{-}(R^2\text{-}O\text{-}C(=O)\text{-}O)_u\text{-}R^{20}\text{-}(OR^1)_t\text{-}OH \qquad \text{Formula (2)},$$

wherein, in the formula (2), $R^1$ is an alkylene group having 2 to 4 carbon atoms; $R^2$ and $R^{20}$ are each a chain hydrocarbon group having 3 to 20 carbon atoms or a cyclic hydrocarbon group having a ring structure that has carbon atoms of 6 to 20; these groups may have one or more substituent groups, when being a cyclic hydrocarbon group, may contain an oxygen atom as an atom constituting the ring, and when containing an oxygen atom, adjacent atoms are simultaneously not an oxygen atom; and s and t are each a repeating number, u is a repeating number of 2 or more, and $(R^2\text{-}O\text{-}C(=O)\text{-}O)_u$ includes two or more units represented by $(R^2\text{-}O\text{-}C(=O)\text{-}O)$.

The number of carbon atoms of the alkylene group of $R^1$ in the formula (2) is 2 to 4, is preferably 2 or 3, and is particularly preferably 3.

$(R^1O)_s$ and $(OR^1)_t$ may each contain two or more oxyalkylene groups. When two or more oxyalkylene groups are contained, a combination of an oxypropylene group and an oxyethylene group is preferred.

When $(R^1O)_s$ is composed of two or more oxyalkylene groups, the arrangement thereof may be random, block, or also a combination of both. Similarly, when $(OR^1)_t$ is composed of two or more oxyalkylene groups, the arrangement thereof may be random, block, or also a combination of both.

$R^2$ and $R^{20}$ in the formula (2) are each a chain hydrocarbon group having 3 to 20 carbon atoms or a cyclic hydrocarbon group having a ring structure that has carbon atoms of 6 to 20; these groups may have one or more substituent groups, when being a cyclic hydrocarbon group, may contain an oxygen atom as an atom constituting the ring, and when containing an oxygen atom, adjacent atoms are simultaneously not oxygen atoms; and u is a repeating number of 2 or more, and $(R^2\text{-}O\text{-}C(=O)\text{-}O)_u$ includes two or more units represented by $(R^2\text{-}O\text{-}C(=O)\text{-}O)$.

The number of carbon atoms of the chain hydrocarbon group of $R^2$ is 3 to 20, is preferably 3 to 18, and is more preferably 4 to 16. In addition, it is preferable that the chain hydrocarbon group in $R^2$ be a linear or branched alkylene group, and be unsubstituted.

When $R^2$ is a cyclic hydrocarbon group which may have a substituent group, $R^2$ is, for example, a group represented by $-R^{21}\text{-}R^{22}\text{-}R^{21}\text{-}$. $R^{21}$ represents a single bond or an alkylene group having 1 to 6 carbon atoms. $R^{22}$ represents an alicyclic hydrocarbon group having 3 to 9 carbon atoms and having a monocyclic structure which may have a substituent group; an alicyclic hydrocarbon group having 4 to 16 carbon atoms and having a polycyclic structure which may have a substituent group; or an aromatic hydrocarbon group having 6 to 18 carbon atoms which may have a substituent group. In the alicyclic hydrocarbon group, one or more carbon atoms constituting the ring may be replaced with an oxygen atom. However, adjacent carbon atoms are simultaneously not replaced with oxygen atoms.

The alkylene group having 1 to 6 carbon atoms in $R^{21}$ may be linear or branched. When $R^{21}$ is an alkylene group having 1 to 6 carbon atoms, the number of carbon atoms is preferably 1 to 4, and more preferably 1 or 2. $R^{21}$ is exemplified by a single bond, a methylene group, an ethylene group, an n-propylene group, an n-butylene group, an n-pentylene group, an n-hexylene group, an isopropylene group, an isobutylene group and a t-butylene group; is preferably a single bond, a methylene group, an ethylene group, an n-propylene group, an isopropylene group, an n-butylene group, an isobutylene group and a t-butylene group; and is more preferably a single bond, a methylene group and an ethylene group.

When $R^{22}$ is a divalent alicyclic saturated hydrocarbon group having 3 to 9 carbon atoms and having an unsubstituted monocyclic structure, the number of carbon atoms of $R^{22}$ is preferably 4 to 8, more preferably 5 to 8, and further preferably 5 or 6, because the stabilities to heat and light are more excellent. The divalent alicyclic saturated hydrocarbon group having 3 to 9 carbon atoms and having an unsubstituted monocyclic structure in $R^{22}$ is exemplified by a cyclopropylene group, a cyclobutylene group, a cyclopentylene group, a cyclohexylene group, a cycloheptylene group, a cyclooctylene group, and a cyclononylene group, and is preferably a cyclopentylene group and a cyclohexylene group.

When $R^{22}$ is a divalent alicyclic saturated hydrocarbon group having 4 to 16 carbon atoms and having an unsubstituted polycyclic structure, the number of carbon atoms of $R^{22}$ is preferably 4 to 15, and more preferably 6 to 12. $R^{22}$ is preferably a group having two or three ring structures, and is more preferably a group having two ring structures.

When $R^{22}$ is an unsubstituted divalent aromatic hydrocarbon group having 6 to 18 carbon atoms, the number of carbon atoms of $R^{22}$ is preferably 6 to 14, and more preferably 6 to 12. The unsubstituted divalent aromatic hydrocarbon group having 6 to 18 carbon atoms is exemplified by a phenylene group and a biphenylene group, and a phenylene group is preferred.

When $R^{22}$ is a divalent alicyclic saturated hydrocarbon group having 3 to 9 carbon atoms having a monocyclic structure and having a substituent group, the monocyclic structure is the same as the above described divalent alicyclic saturated hydrocarbon group having 3 to 9 carbon atoms and having the unsubstituted monocyclic structure.

When $R^{22}$ is a divalent alicyclic hydrocarbon group having 4 to 16 carbon atoms having a polycyclic structure and having a substituent group, the polycyclic structure is the same as the above described divalent alicyclic saturated hydrocarbon group having 4 to 16 carbon atoms and having the unsubstituted polycyclic structure.

When $R^{22}$ is a divalent aromatic hydrocarbon group having 6 to 18 carbon atoms and having a substituent group, the aromatic hydrocarbon group is the same as the case of the unsubstituted divalent aromatic hydrocarbon group having 6 to 18 carbon atoms described above.

The number of carbons of $R^{22}$ indicates only the number of carbon atoms constituting the ring, and does not include the number of carbons of substituent groups.

When $R^2$ is the case of a chain hydrocarbon group having substituent group, the substituent group is exemplified by a halogen atom and an alkoxy group. As the halogen atom, a chlorine atom is preferred. As the alkoxy group, a methoxy group and an ethoxy group are preferred. It is preferable for the number of substituent groups to be 1 to 4, and is more preferable to be 1 to 2.

When $R^2$ is the case of a cyclic hydrocarbon group having a substituent group, examples of the substituent group include an alkyl group having 1 to 8 carbon atoms, a halogen atom and an alkoxy group.

The alkyl group having 1 to 8 carbon atoms is exemplified by a methyl group, an ethyl group, an n-propyl group, an isopropyl group, an n-butyl group, a t-butyl group, a pentyl group, a hexyl group, a heptyl group and an octyl group. Among the alkyl groups, a methyl group, an ethyl group, an n-propyl group, an isopropyl group, an n-butyl group and a t-butyl group are preferable, and a methyl group, an ethyl group and a t-butyl group are more preferable.

As the halogen atom, a chlorine atom is preferred. As the alkoxy group, a methoxy group and an ethoxy group are preferred. It is preferable for the number of substituent groups to be 1 to 4, and is more preferable to be 1 to 2.

When $R^{22}$ is the case of an alicyclic saturated hydrocarbon group which has a monocyclic structure or a polycyclic structure, and in which one or more carbon atoms constituting the ring are substituted with an oxygen atom, a ratio of the number of oxygen atoms to the total number of atoms constituting the ring is preferably 5 to 50%, and more preferably 10 to 30%.

In the formula (2), s and t are repeating numbers, and are preferably integers of 1 or more.

The s and t in the formula (2) are appropriately adjusted according to the Mn of the polycarbonate diol which becomes a raw material of the polyether polycarbonate diol so that the Mn of the polyether polycarbonate diol becomes the range.

In the formula (2), s and t may be the same value or a different value, but are preferably substantially the same value, because the production conditions can be easily set.

In the $(R^2\text{-O-C}(=O)\text{-O})_u$ in the formula (2), $R^2$ contains two or more different types of units. The $(R^2\text{-O-C}(=O)\text{-O})_u$ in the formula (2) may contain three or more types of units.

The arrangement of two or more units constituting the $(R^2\text{-O-C}(=O)\text{-O})_u$ may be random, block, or also a combination of both.

It is preferable for a content of the polyether polycarbonate diol in the adhesive composition to be 10 to 70% by mass, is more preferable to be 15 to 65% by mass, is further preferable to be 18 to 60% by mass, and is still further preferable to be 20 to 40% by mass, based on the total amount of the adhesive composition. When the content of the polyether polycarbonate diol is greater than or equal to the lower limit value, the adhesiveness to resin materials becomes more satisfactory; and in addition, when the content is less than or equal to the upper limit value, the viscosity of the composition decreases, thereby, preparation and coating are facilitated, and the compatibility with the polyisocyanate compound or the isocyanate group-terminated urethane prepolymer is improved, which will be described later.

(Method For Producing Polyether Polycarbonate Diol)

The method for producing the polyether polycarbonate diol is not particularly limited, and for example, there is a method of obtaining the polyether polycarbonate diol by ring-opening addition of a cyclic ether using a polycarbonate diol as an initiator, in the presence of a catalyst.

Examples of the polycarbonate diol include a condensate of two or more alcohols and a carbonate compound. Examples of the alcohols and the carbonate compound include those exemplified in the section of [Polycarbonate diol].

The polycarbonate diols may be used alone, or in combination of two or more types.

Examples of the cyclic ethers include the same compounds as those described above. The cyclic ether for causing ring-opening addition polymerization is preferably, for example, ethylene oxide, propylene oxide, butylene oxide, or tetramethylene oxide, and it is more preferable to contain propylene oxide, from the viewpoint of further improving the adhesiveness to resin materials.

As a catalyst for causing ring-opening polymerization by addition of a cyclic ether to an initiator, a conventionally known catalyst can be used. Examples of the catalyst include an alkali catalyst such as potassium hydroxide; a transition metal compound-porphyrin complex catalyst such as a complex obtained by reacting an organoaluminum compound with porphyrin; a double metal cyanide complex catalyst (hereinafter, also referred to as "DMC catalyst"); and a catalyst formed from a phosphazene compound.

The amount of the catalyst to be added is not particularly limited as long as the amount is necessary for the ring-opening polymerization of the cyclic ether, but is preferably as small as possible; and is preferably 0.001 to 10 parts by mass, more preferably 0.002 to 5 parts by mass, and further preferably 0.05 to 3 parts by mass, based on 100 parts by mass of the obtained polyether polycarbonate diol.

[One-Component Curable Urethane Adhesive Composition and Two-Component Curable Urethane Adhesive Composition]

An adhesive composition of the present invention includes a one-component curable urethane adhesive composition and a two-component curable urethane adhesive composition. The one-component curable urethane adhesive composition contains the polyether polycarbonate diol and a polyisocyanate compound or an isocyanate group-terminated urethane prepolymer. The two-component curable urethane adhesive composition includes a main agent containing an isocyanate group-terminated urethane prepolymer, and a curing agent containing the polyether polycarbonate diol.

(Two-Component Curable Urethane Adhesive Composition)

The two-component curable urethane adhesive composition includes the main agent containing an isocyanate group-terminated urethane prepolymer, and a curing agent containing the polyether polycarbonate diol.

<Main Agent>

The isocyanate group-terminated urethane prepolymer contained in the main agent is obtained by reacting a polyisocyanate compound with a compound having two or more active hydrogen-containing groups in one molecule (hereinafter referred to as an "active hydrogen compound") so that the isocyanate group becomes excessive to the active hydrogen-containing group. Examples of the active hydrogen-containing group include a hydroxyl group, an amino group and an imino group.

Examples of such an active hydrogen compound include a polyol having two or more hydroxyl groups in one molecule, and a polyamine having two or more amino groups in one molecule; and a polyol is preferable, and the previously described polyether polycarbonate diol may be used.

[Polyol]

It is preferable that the number average molecular weight (Mn) of the polyol include a trifunctional component and a bifunctional component, from the viewpoint that the viscosity of the urethane prepolymer obtained by the reaction with the polyisocyanate compound has appropriate fluidity at normal temperature (25°C). It is preferable for Mn of the trifunctional component to be 1000 to 10000, and is more preferable to be 2000 to 8000. It is preferable for Mn of the bifunctional component to be 500 to 5000, and is more preferable to be 1000 to 3000.

The Mn of the polyol is a value obtained by the same method as the method for measuring the Mn of the polyether polycarbonate diol described above. When the Mn of the polyol is within the above range, the viscosity is lower, and better reactivity with an isocyanate group can be obtained.

The molecular weight, backbone and the like of the polyol are not particularly limited as long as the polyol is a compound having two or more hydroxyl groups. Examples of the polyol include polyether polyol, polyester polyol, polymer polyol, poly(meth)acrylic polyol, polycarbonate polyol, castor oil-based polyol, and polyolefin polyol; and polyols described in paragraphs [0016] to [0028] of JP-2020-37689 A can be used without particular limitation. These polyols may be used alone, or in combination of two or more types.

In addition, as the polyol, such polymer polyol of having (meth)acrylate monomer units dispersed in polyether polyol can also be used. The polymer polyol may be a commercially available product; and examples thereof include "Altiflow (registered trademark)" series, "Sharpflow (registered trademark)" series (all produced by Sanyo Chemical Industries, Ltd.), and "Excenol (registered trademark)" series (produced by AGC Inc.).

For information, in the present specification, (meth)acryl means acryl and/or methacryl, and(meth)acrylate means acrylate and/or methacrylate.

[Polyisocyanate Compound]

The polyisocyanate compound is an organic compound having two or more isocyanate groups in one molecule. The number of isocyanate groups in one molecule is preferably 2 to 4. One polyisocyanate compound can be used alone, or two or more polyisocyanate compounds can be used in combination.

Examples of the polyisocyanate compound include linear or branched aliphatic diisocyanate compounds such as tetramethylene diisocyanate, pentamethylene diisocyanate, hexamethylene diisocyanate (HDI), 2,2,4-trimethylhexamethylene diisocyanate, 2,4,4-trimethylhexamethylene diisocyanate, dodecamethylene diisocyanate, lysine diisocyanate, 2-methylpentane-1,5-diisocyanate, and 3-methylpentane-1,5-diisocyanate;

alicyclic diisocyanate compounds such as norbornane diisocyanate (NBDI), isophorone diisocyanate (IPDI), hydrogenated xylylene diisocyanate, 4,4'-dicyclohexylmethane diisocyanate, 1,4-cyclohexane diisocyanate, methylcyclohexylene diisocyanate, 1,3-bis(isocyanatemethyl)cyclohexane, and dicyclohexylmethane diisocyanate ($H_{12}$MDI); aromatic polyisocyanate compounds such as tolylene diisocyanate (TDI), 2,2'-diphenylmethane diisocyanate, 2,4'-diphenylmethane diisocyanate, 4,4'-diphenylmethane diisocyanate (MDI), 1,3-phenylene diisocyanate, 1,4-phenylene diisocyanate, polymethylene polyphenylene polyisocyanate, xylylene diisocyanate, $\alpha,\alpha,\alpha',\alpha'$-tetramethylxyly-lene diisocyanate, 4,4'-dibenzyl diisocyanate, tolidine diisocyanate, 1,5-naphthalene diisocyanate, dialkyldiphenylmethane diisocyanate and tetraalkyldiphenylmethane diisocyanate; and polyisocyanate compounds having three or more isocyanate groups in one molecule such as isocyanurate-modified products of the above-described diisocyanate compounds; biuret-modified products of the above-described diisocyanate compounds; allophanate-modified products of the above-described diisocyanate compounds; carbodiimide-modified products of the above-described diisocyanate compounds; tri- and higher functional isocyanate group-terminated urethane prepolymers (adduct-modified products) obtained by reacting the above-described diisocyanate compounds with polyols having three or more hydroxyl groups in one molecule; water-dispersible polyisocyanate compounds such as water-dispersible isocyanates and block isocyanates; and triphenylmethane triisocyanate.

Examples of commercial products of the isocyanurate-modified products include DURANATE TPA-100 and DURANATE TKA-100 (manufactured by Asahi Kasei Corporation) and Coronate HX (manufactured by Tosoh Corporation).

Examples of commercial products of the biuret-modified products include DURANATE 24A-100 and DURANATE 22A-75P (manufactured by Asahi Kasei Corporation).

Examples of commercial products of the tri- and higher functional isocyanate group-terminated urethane prepolymers include Coronate L, Coronate L-55E, and Coronate L-45E (all are manufactured by Tosoh Corporation).

Examples of commercial products of the water-dispersible isocyanates include DURANATE WB40-100, DURANATE WB40-80D, DURANATE WT20-100, DURANATE WL70-100, DURANATE WE50-100, and DURANATE WR80-70P (manufactured by Asahi Kasei Corporation), and Aquanate 105, Aquanate 130, Aquanate 140, Aquanate 200, and Aquanate 210 (manufactured by Tosoh Corporation).

Examples of commercial products of the block isocyanates include SU-268A, NBP-211, MEIKANATE CX, MEIKANATE TP-10, and DM-6400 (all are manufactured by Meisei Chemical Works, Ltd.); WM44-L70G (manufactured by Asahi Kasei Corporation); Aqua BI200 and Aqua BI220 (all are manufactured by Baxenden chemicals); TAKELAC W and TAKELAC WPB (all are manufactured by Mitsui Chemicals, Inc.); BURNOCK (manufactured by DIC CORPORATION); and ELASTRON (manufactured by DKS Co. Ltd.).

It is preferable for a content of the isocyanate group in the polyisocyanate compound to be 20% by mass or more, is more preferable to be 25% by mass or more, and is particularly preferable to be 30% by mass or more; and is preferable to be 50% by mass or less, is more preferable to be 45% by mass or less, and is further preferable to be 40% by mass or less, from the viewpoint that good reactivity with the polyol is obtained.

As the polyisocyanate compound containing an isocyanate group in the above preferable range, specifically, an aliphatic diisocyanate compound, an alicyclic diisocyanate compound, and an aromatic polyisocyanate compound are preferable; and examples thereof include MDI (content of isocyanate group: 33.6% by mass), polymeric MDI (content of isocyanate group: 31.0% by mass), crude MDI (mixture of MDI and triphenylmethane triisocyanate), and IPDI (content of isocyanate group: 37.8% by mass).

In obtaining the isocyanate group-terminated urethane prepolymer, a molar ratio of the isocyanate group in the polyisocyanate compound to the hydroxyl group in the polyol (isocyanate group/ hydroxyl group) is preferably 110 or more and 600 or less.

It is preferable for the molar ratio to be 120 or more, is more preferable to be 125 or more, and is particularly preferable to be 130 or more; and is preferable to be 500 or less, is more preferable to be 400 or less, and is particularly preferable to be 300 or less. When the molar ratio is within the range, an isocyanate group-terminated urethane prepolymer having an appropriate molecular chain length can be produced, and therefore, the productivity is more enhanced.

A molecular weight of the polyisocyanate compound is not particularly limited, but is preferably 120 to 400, more preferably 130 to 390, and particularly preferably 140 to 380. When the molecular weight of the polyisocyanate compound is within the range, good reactivity with a polyol can be obtained.

[Method for Producing Isocyanate Group-Terminated Urethane Prepolymer]

The isocyanate group-terminated urethane prepolymer can be produced by reacting a polyol with a polyisocyanate compound.

For the production of the isocyanate group-terminated urethane prepolymer, a catalyst can be used as needed. Examples of the catalyst include tertiary amine-based compounds; tin-based compounds; and non-tin-based compounds. One catalyst can be used alone, or two or more catalysts can be used in combination.

Examples of the tertiary amine-based compounds include triethylamine, triethylenediamine, and 1,8-diazabicyclo[5.4.0]-7-undecene (DBU).

Examples of the tin-based compounds include dibutyltin dichloride, dibutyltin oxide, dibutyltin dibromide, dibutyltin dimaleate, dibutyltin dilaurate (DBTDL), dibutyltin diacetate, dibutyltin sulfide, tributyltin sulfide, tributyltin oxide, tributyltin acetate, triethyltin ethoxide, tributyltin ethoxide, dioctyltin oxide, tributyltin chloride, tributyltin trichloroacetate, and tin 2-ethylhexanoate.

Examples of the non-tin-based compounds include titanium-based compounds such as dibutyltitanium dichloride, tetrabutyl titanate, and butoxytitanium trichloride; lead-based compounds such as lead oleate, lead 2-ethylhexanoate, lead benzoate, and lead naphthenate; iron-based compounds such as iron 2-ethylhexanoate and iron acetylacetonate; cobalt-based compounds such as cobalt benzoate and cobalt 2-ethylhexanoate; zinc-based compounds such as zinc naphthenate and zinc 2-ethylhexanoate; and zirconium-based compounds such as zirconium naphthenate.

The amount of the catalyst used when the catalyst is used is not particularly limited but is preferably 0.001 parts by mass or more, more preferably 0.002 parts by mass or more, and particularly preferably 0.003 parts by mass or more and preferably 1.0 part by mass or less, more preferably 0.2 parts by mass or less, and particularly preferably 0.05 parts by mass or less based on 100 parts by mass of the total of the polyol and the polyisocyanate compound.

For the production of the isocyanate group-terminated urethane prepolymer, a solvent can be used as needed.

Examples of the solvent include ketones such as acetone and methyl ethyl ketone; esters such as ethyl acetate; and aromatic hydrocarbons such as toluene and xylene. One solvent can be used alone, or two or more solvents can be used in combination.

The amount of the solvent used when the solvent is used is not particularly limited but is preferably 30 parts by mass or more, more preferably 40 parts by mass or more, and particularly preferably 50 parts by mass or more and preferably 500 parts by mass or less, more preferably 450 parts by mass or less, and particularly preferably 400 parts by mass or less based on 100 parts by mass of the total of the polyol and the polyisocyanate compound.

Examples of the method for producing the isocyanate group-terminated urethane prepolymer include the methods described below.

Production method 1: a method of charging a polyol, a polyisocyanate compound, an optional catalyst, and an optional solvent together

Production method 2: a method of charging a polyol, a polyoxyalkylene polymer, an optional catalyst, and an optional solvent, and adding a polyisocyanate compound dropwise thereto

In the case of the production method 2, the low molecular components in the raw materials are preferentially reacted, the molecular weight distribution can be more narrowed, and the reaction is easily controlled.

The reaction temperature is preferably 50°C or more, more preferably 60°C or more, and particularly preferably 65 or more and preferably less than 100°C, more preferably 95°C or less, and particularly preferably 80°C or less. When the reaction temperature is within the range, side reactions other than the urethane reaction are easily suppressed, and therefore the desired isocyanate group-terminated urethane prepolymer is easily obtained.

After the completion of the reaction, a reaction terminating agent may be added to deactivate the catalyst. Examples of the reaction terminating agent include acetylacetone. Two or more reaction terminating agents may be used in combination.

The Mn of the isocyanate group-terminated urethane prepolymer is not particularly limited but is preferably 2500 or more, more preferably 3000 or more, and particularly preferably 4000 or more and preferably 50000 or less, more preferably 40000 or less, and particularly preferably 30000 or less. When the Mn is within the range, an adhesive composition excellent in coating properties is obtained, and the viscosity during the synthesis can be adjusted.

The Mn of the isocyanate group-terminated urethane prepolymer is a value obtained by the same method as the method for measuring the Mn of the polyether polycarbonate diol described above.

It is preferable that the isocyanate group-terminated urethane prepolymer be a urethane prepolymer which is obtained by reacting a polyether polyol with an aromatic polyisocyanate compound, or a urethane prepolymer which is obtained by reacting the polyether polycarbonate diol with an aromatic polyisocyanate compound, from the viewpoint of being more excellent in adhesiveness to resin materials. As the aromatic polyisocyanate compound, the same compounds as the compounds exemplified in the above can be used.

A content of the isocyanate group-terminated urethane prepolymer in the adhesive composition is preferably 18 to 90% by mass, more preferably 20 to 80% by mass, further preferably 22 to 70% by mass, and still further preferably 22 to 50% by mass, based on the total amount of the adhesive composition. When the content of the isocyanate group-terminated urethane prepolymer is greater than or equal to the lower limit value, the adhesiveness and the strength and elongation at break of the cured product are easily improved, and when the content is less than or equal to the upper limit value, good compatibility with other polymers can be obtained.

<Curing Agent>

The curing agent contains the previously described polyether polycarbonate diol. The curing agent may contain a catalyst in addition to the previously described polyether polycarbonate diol, from the viewpoint of promoting the effect at the time when the main agent and the curing agent are mixed.

Examples of the catalyst include the above described tertiary amine-based compound, tin-based compound and non-tin-based compound which can be each used in the production of the isocyanate group-terminated urethane prepolymer. One catalyst can be used alone, or two or more catalysts can be used in combination.

When the catalyst is blended, the amount thereof is not particularly limited, but is preferably 0.00001 parts by mass or more, more preferably 0.00005 parts by mass or more, and particularly preferably 0.0001 parts by mass or more; and also, is preferably 1.0 parts by mass or less, more preferably 0.2 parts by mass or less, and particularly preferably 0.05 parts by mass or less, based on 100 parts by mass of the polyether polycarbonate diol.

In the two-component curable urethane adhesive composition, an isocyanate index is preferably 80 or larger and 150 or smaller, which represents a molar ratio (isocyanate group / hydroxyl group) of the isocyanate group in the isocyanate group-terminated urethane prepolymer to the hydroxyl group in the polyether polycarbonate diol.

Such isocyanate index is more preferably 85 or larger, further preferably 90 or larger, and particularly preferably 95 or larger; and also, is more preferably 140 or smaller, further preferably 130 or smaller, and particularly preferably 120 or smaller. When the isocyanate index is within the preferable range, the breaking strength and the breaking elongation of the cured product tend to be easily improved which has been obtained by curing the two-component curable urethane adhesive composition. For information, the isocyanate index calculates as the ratio of the number of moles of the isocyanate group in the isocyanate group-terminated urethane prepolymer to the total number of moles of the hydroxyl group in the polyether polycarbonate diol multiplied by 100.

The main agent and the curing agent in the two-component curable urethane adhesive composition may further contain a solvent, an additive which will be described later, and the like.

As the solvent, the above described solvent is preferred which can be used as needed in the production of the isocyanate group-terminated urethane prepolymer.

In addition, when the solvent is contained, the amount thereof is preferably 30 parts by mass or more, more preferably 40 parts by mass or more, and particularly preferably 50 parts by mass or more; and also, is preferably 500 parts by mass or less, more preferably 450 parts by mass or less, and particularly preferably 400 parts by mass or less, based on 100 parts by mass of the isocyanate group-terminated urethane prepolymer.

A ratio of the total of the main agent and the curing agent in the two-component curable urethane adhesive composition is preferably 50% by mass or larger and 100% by mass or smaller. The ratio of the total of the main agent and the curing agent is more preferably 55% by mass or larger, and further preferably 60% by mass or larger; and also, is more preferably smaller than 100% by mass, further preferably 99.5% by mass or smaller, and still further preferably 95% by mass or smaller.

(Method for Producing Two-Component Curable Urethane Adhesive Composition)

A known method can be applied to the method for producing the two-component curable urethane adhesive composition. For example, the main agent can be produced by uniformly stirring and mixing the components contained in the main agent, which are specifically the isocyanate group-terminated urethane prepolymer, the solvent to be contained as needed, and one or more types of the additives that will be described later. In addition, the curing agent can be produced by uniformly stirring and mixing the components contained in the curing agent, which are specifically the polyether polycarbonate diol, the catalyst component to be contained as needed, the solvent, and one or more types of the additives that will be described later.

For the stirring and mixing, a known stirring mixer such as a plastomill, a kneader, a Banbury mixer, or a roll can be used, which is equipped with a heating device. It is preferable to perform the stirring and mixing under an atmosphere of an inert gas such as nitrogen gas, or under a reduced-pressure dehydrated atmosphere.

For information, the order of addition of each of the above components is not particularly limited.

The main agent and the curing agent are each housed in a separate container. As the container, various containers can be used such as tubes and bottles.

[Additives That can Be Blended in Two-Component Curable Urethane Adhesive Composition]

The two-component curable urethane adhesive composition can include additives such as a hydrolysis inhibitor, an antioxidant, an ultraviolet absorbing agent, a light stabilizer, a filler, a plasticizer, an antistatic agent, a leveling agent, and other optional components as needed, in a range that does not impair the effect of the present invention.

-Hydrolysis Inhibitor-

Examples of the hydrolysis inhibitor include carbodiimide-based, isocyanate-based, oxazoline-based, and epoxy-based hydrolysis inhibitors. One hydrolysis inhibitor can be used alone, or two or more hydrolysis inhibitors can be used in combination. Among these, carbodiimide-based hydrolysis inhibitors are preferred from the viewpoint of a hydrolysis suppression effect.

--Carbodiimide-Based Hydrolysis Inhibitors--

The carbodiimide-based hydrolysis inhibitors are compounds having one or more carbodiimide groups in one molecule. Examples of monocarbodiimide compounds include dicyclohexylcarbodiimide, diisopropylcarbodiimide, dimethylcarbodiimide, diisobutylcarbodiimide, dioctylcarbodiimide, diphenylcarbodiimide, and naphthylcarbodiimide.

Polycarbodiimide compounds can be produced by subjecting a diisocyanate to a decarboxylation condensation reaction in the presence of a carbodiimidization catalyst.

Examples of the diisocyanate include MDI, 3,3'-dimethoxy-4,4'-diphenylmethane diisocyanate, 3,3'-dimethyl-4,4'-diphenylmethane diisocyanate, 4,4'-diphenyl ether diisocyanate, 3,3'-dimethyl-4,4'-diphenyl ether diisocyanate, 2,4-tolylene diisocyanate, 2,6-tolylene diisocyanate, 1-methoxyphenyl-2,4-diisocyanate, IPDI, 4,4'-dicyclohexylmethane diisocyanate, and tetramethylxylylene diisocyanate.

Examples of the carbodiimidization catalyst include phospholene oxides such as 1-phenyl-2-pholene-1-oxide, 3-methyl-2-phospholene-1-oxide, 1-ethyl-3-methyl-2-phospholene-1-oxide, 1-ethyl-2-phospholene-1-oxide, and 3-phospholene isomers thereof.

--Isocyanate-Based Hydrolysis Inhibitors--

Examples of the isocyanate-based hydrolysis inhibitors include 2,4-tolylene diisocyanate, 2,6-tolylene diisocyanate, m-phenylene diisocyanate, p-phenylene diisocyanate, 4,4'-diphenylmethane diisocyanate, 2,4'-diphenylmethane diisocyanate, 2,2'-diphenylmethane diisocyanate, 3,3'-dimethyl-4,4'-biphenylene diisocyanate, 3,3'-dimethoxy-4,4'-biphenylene diisocyanate, 3,3'-dichloro-4,4'-biphenylene diisocyanate, 1,5-naphthalene diisocyanate, 1,5-tetrahydronaphthalene diisocyanate, tetramethylene diisocyanate, 1,6-hexamethylene diisocyanate, dodecamethylene diisocyanate, trimethylhexamethylene diisocyanate, 1,3-cyclohexylene diisocyanate, 1,4-cyclohexylene diisocyanate, xylylene diisocyanate, tetramethylxylylene diisocyanate, hydrogenated xylylene diisocyanate, lysine diisocyanate, IPDI, 4,4'-dicyclohexylmethane diisocyanate, and 3,3'-dimethyl-4,4'-dicyclohexylmethane diisocyanate.

--Oxazoline-Based Hydrolysis Inhibitors--

Examples of the oxazoline-based hydrolysis inhibitors include 2,2'-o-phenylenebis(2-oxazoline), 2,2'-m-phenylenebis(2-oxazoline), 2,2'-p-phenylenebis(2-oxazoline), 2,2'-p-phenylenebis(4-methyl-2-oxazoline), 2,2'-m-phenylenebis(4-methyl-2-oxazoline), 2,2'-p-phenylenebis(4,4'-dimethyl-2-oxazoline), 2,2'-m-phenylenebis(4,4'-dimethyl-2-oxazoline), 2,2'-ethylenebis(2-oxazoline), 2,2'-tetramethylenebis(2-oxazoline), 2,2'-hexamethylenebis(2-oxazoline), 2,2'-octamethylenebis(2-oxazoline), 2,2'-ethylenebis(4-methyl-2-oxazoline), and 2,2'-diphenylenebis(2-oxazoline).

--Epoxy-Based Hydrolysis Inhibitors--

Examples of the epoxy-based hydrolytic agents include diglycidyl ethers of aliphatic diols such as 1,6-hexanediol, neopentyl glycol, and polyalkylene glycols; polyglycidyl ethers of aliphatic polyols such as sorbitol, sorbitan, polyglycerol, pentaerythritol, diglycerol, glycerol, and trimethylolpropane; polyglycidyl ethers of alicyclic polyols such as cyclohexanedimethanol; diglycidyl esters or polyglycidyl esters of aliphatic or aromatic polyvalent carboxylic acids such as terephthalic acid, isophthalic acid, naphthalenedicarboxylic acid, trimellitic acid, adipic acid, and sebacic acid; diglycidyl ethers or polyglycidyl ethers of polyhydric phenols such as resorcinol, bis(p-hydroxyphenyl)methane, 2,2-bis(p-hydroxyphenyl)propane, tris(p-hydroxyphenyl)methane, and 1,1,2,2-tetrakis(p-hydroxyphenyl)ethane; N-glycidyl derivatives of amines such as N,N-diglycidylaniline, N,N-diglycidyltoluidine, and N,N,N',N'-tetraglycidyl-bis-(p-aminophenyl) methane; triglycidyl derivatives of aminophenols; triglycidyl tris(2-hydroxyethyl)isocyanurate; triglycidyl isocyanurate; and epoxy resins such as orthocresol type epoxy resins and phenol novolac type epoxy resins.

The amount of the hydrolysis inhibitor added is not particularly limited but is preferably 5 parts by mass or less, more preferably 4.5 parts by mass or less, and particularly preferably 3 parts by mass or less based on 100 parts by mass of the isocyanate group-terminated urethane prepolymer.

-Antioxidant-

Examples of the antioxidant include radical scavengers such as phenol-based compounds and amine-based compounds; and peroxide decomposers such as sulfur-based compounds and phosphorus-based compounds. One antioxidant can be used alone, or two or more antioxidants can be used in combination.

--Phenol-Based Compounds--

Examples of the phenol-based compounds include 2,6-di-t-butyl-p-cresol, butylated hydroxyanisole, 2,6-di-t-butyl-4-ethylphenol, stearin-$\beta$-(3,5-di-t-butyl-4-hydroxyphenyl)propionate, 2,2'-methylenebis(4-methyl-6-t-butylphenol), 2,2'-methylenebis(4-ethyl-6-t-butylphenol), 4,4'-thiobis(3-methyl-6-t-butylphenol), 4,4'-butylidenebis(3-methyl-6-t-butylphenol), 3,9-bis[1,1-dimethyl-2-[$\beta$-(3-t-butyl-4-hydroxy-5-methylphenyl)propionyloxy]ethyl]2,4,8,10-tetraoxaspiro[5,5] undecane, benzenepropanoic acid, 3,5-bis(1,1-dimethylethyl)-4-hydroxy-,C7-C9 side chain alkyl esters (BASF product name Irganox 1135), 1,1,3-tris(2-methyl-4-hydroxy-5-t-butylphenyl)butane, 1,3,5-trimethyl-2,4,6-tris(3,5-di-t-butyl-4-hydroxybenzyl)benzene, tetrakis-[methylene-3-(3',5'-di-t-butyl-4'-hydroxyphenyl)propionate]methane, bis[3,3'-bis-(4'-hydroxy-3'-t-butylphenyl)butyric acid]glycol ester, 1,3,5-tris(3',5'-di-t-butyl-4'-hydroxybenzyl)-S-triazine-2,4,6-(1H,3H,5H) trione, and tocophenol.

--Amine-Based Compounds--

Examples of the amine-based compounds include bis(2,2,6,6-tetramethyl-4-piperidyl)sebacate, polycondensates of dimethyl succinate and 1-(2-hydroxyethyl)-4-hydroxy-2,2,6,6-tetramethylpiperidineethanol, N,N',N'',N'''-tetrakis-(4,6-bis-(butyl-(N-methyl-2,2,6,6-tetramethylpiperidin-4-yl)amino)-triazin-2-yl)-4,7-diazadecane-1,10-diamine, and polycondensates of dibutylamine•1,3,5-triazine•N,N'-bis(2,2,6,6-tetramethyl-4-piperidyl)-1,6-hexamethylenediamine and N-(2,2,6,6-tetramethyl-4-piperidyl)butylamine.

--Sulfur-Based Compounds--

Examples of the sulfur-based compounds include dilauryl 3,3'-thiodipropionate, dimyristyl 3,3'-thiodipropionate, and distearyl 3,3'-thiodipropionate.

--Phosphorus-Based Compounds--

Examples of the phosphorus-based compounds include triphenyl phosphite, diphenyl isodecyl phosphite, 4,4'-butylidene-bis(3-methyl-6-tert-butylphenyl ditridecyl)phosphite, cyclic neopentanetetrayl bis(octadecyl phosphite), tris(nonylphenyl)phosphite, tris(monononylphenyl)phosphite, tris(dinonylphenyl)phosphite, diisodecyl pentaerythritol diphosphite, 9,10-dihydro-9-oxa-10-phosphaphenanthrene-10-oxide, 10-(3,5-di-tert-butyl-4-hydroxybenzyl)-9,10-dihydro-9-oxa-10-phosphaphenanthrene-10-oxide, 10-decyloxy-9,10-dihydro-9-oxa-10-phosphaphenanthrene, tris(2,4-di-tert-butylphenyl)phosphite, cyclic neopentanetetrayl bis(2,4-di-tert-butylphenyl)phosphite, cyclic neopentanetetrayl bis(2,6-di-tert-butyl-4-methylphenyl)phosphite, and 2,2-methylenebis(4,6-di-tert-butylphenyl)octyl phosphite.

By using the antioxidant, the thermal deterioration of the isocyanate group-terminated urethane prepolymer can be prevented.

The amount of the antioxidant added is not particularly limited but is preferably 5 parts by mass or less, more preferably 3 parts by mass or less, and particularly preferably 2 parts by mass or less based on 100 parts by mass of the isocyanate group-terminated urethane prepolymer.

As the antioxidant, one or more phenol-based compounds, which are radical scavengers, are preferably used from the viewpoint of stability and an oxidation prevention effect. It is also possible to use one or more phenol-based compounds, which are radical scavengers, and one or more phosphorus-based compounds, which are peroxide decomposers, in combination. It is also possible to use a phenol-based compound, which is a radical scavenger, and a phosphorus-based compound, which is a peroxide decomposer, in combination as antioxidants and use these antioxidants and a hydrolysis inhibitor described above in combination.

-Ultraviolet Absorbing Agent-

Examples of the ultraviolet absorbing agent include benzophenone-based compounds, benzotriazole-based compounds, salicylic acid-based compounds, oxalic acid anilide-based compounds, cyanoacrylate-based compounds, and triazine-based compounds. One ultraviolet absorbing agent can be used alone, or two or more ultraviolet absorbing agents can be used in combination.

The amount of the ultraviolet absorbing agent added is not particularly limited but is preferably 3 parts by mass or less, more preferably 2.5 parts by mass or less, and particularly preferably 2 parts by mass or less based on 100 parts by mass of the isocyanate group-terminated urethane prepolymer.

-Light Stabilizer-

Examples of the light stabilizer include hindered amine-based compounds and hindered piperidine-based compounds. One light stabilizer can be used alone, or two or more light stabilizers can be used in combination.

The amount of the light stabilizer added is not particularly limited but is preferably 2 parts by mass or less, more preferably 1.5 parts by mass or less, and particularly preferably 1 part by mass or less based on 100 parts by mass of the isocyanate group-terminated urethane prepolymer.

- Filler -

Examples of fillers include inorganic or organic fillers such as, in particular, natural, heavy or precipitated calcium carbonate which is optionally coated with a fatty acid, especially stearic acid; barite; talc; quartz powder; quartz sand; dolomite; wollastonite; kaolin; calcined kaolin; mica (potassium aluminum silicate); zeolite; molecular sieve; aluminum oxide; aluminum hydroxide; magnesium hydroxide; silica including finely pulverized silica by a pyrogenic process; industrially produced carbon black; graphite; metal powder such as aluminum, copper, iron, silver or steel; PVC powder or hollow spheres; and flame-retardant fillers such as hydroxides or hydrates, especially hydroxides or hydrates of aluminum, and preferably aluminum hydroxide.

The amount of the filler to be added is not particularly limited, but is preferably 80 parts by mass or less, more preferably 70 parts by mass or less, and particularly preferably 60 parts by mass or less, based on 100 parts by mass of the isocyanate group-terminated urethane prepolymer.

-Plasticizer-

Examples of the plasticizer include di-2-ethylhexyl phthalate, dibutyl phthalate, dilauryl phthalate, dioctyl adipate, diisononyl phthalate (DINP), diisodecyl phthalate (DIDP), diisodecyl adipate, tributyl phosphate, trioctyl phosphate, propylene glycol adipate polyester, butylene glycol adipate polyester, epoxidized soybean oil, chlorinated paraffin and liquid paraffin.

The amount of the plasticizer to be added is not particularly limited, but is preferably 40 parts by mass or less, more preferably 30 parts by mass or less, and particularly preferably 25 parts by mass or less, based on 100 parts by mass of the isocyanate group-terminated urethane prepolymer.

-Antistatic Agent-

Examples of the antistatic agent include inorganic salts, polyhydric alcohol compounds, ionic liquids, and surfactants. One antistatic agent can be used alone, or two or more antistatic agents can be used in combination.

Among these, ionic liquids are preferred. The "ionic liquid" is also referred to as a room temperature molten salt and is a salt having fluidity at 25°C.

--Inorganic Salts--

Examples of the inorganic salts include sodium chloride, potassium chloride, lithium chloride, lithium perchlorate, ammonium chloride, potassium chlorate, aluminum chloride, copper chloride, ferrous chloride, ferric chloride, ammonium sulfate, potassium nitrate, sodium nitrate, sodium carbonate, and sodium thiocyanate.

--Polyhydric Alcohol Compounds--

Examples of the polyhydric alcohol compounds include propanediol, butanediol, hexanediol, polyethylene glycol, trimethylolpropane, and pentaerythritol.

--Ionic Liquids--

Examples of the ionic liquids include ionic liquids including imidazolium ions such as 1-ethyl-3-methylimidazolium bis(trifluoromethylsulfonyl)imide, 1,3-dimethylimidazolium bis(trifluoromethylsulfonyl)imide, and 1-butyl-3-methylimidazolium bis(trifluoromethylsulfonyl)imide; ionic liquids including pyridinium ions such as 1-methylpyridinium bis(trifluoromethylsulfonyl)imide, 1-butylpyridinium bis(trifluoromethylsulfonyl)imide, 1-hexylpyridinium bis(trifluoromethylsulfonyl)imide, 1-octylpyridinium bis(trifluoromethylsulfonyl)imide, 1-hexyl-4-methylpyridinium bis(trifluoromethylsulfonyl)imide, 1-hexyl-4-methylpyridinium hexafluorophosphate, 1-octyl-4-methylpyridinium bis(trifluoromethylsulfonyl)imide, 1-octyl-4-methylpyridinium bis(fluorosulfonyl)imide, 1-methylpyridinium bis(perfluoroethylsulfonyl)imide, and 1-methylpyridinium bis(perfluorobutylsulfonyl)imide; ionic liquids including ammonium ions such as trimethylheptylammonium bis(trifluoromethanesulfonyl)imide, N,N-diethyl-N-methyl-N-propylammonium bis(trifluoromethanesulfonyl)imide, N,N-diethyl-N-methyl-N-pentylammonium bis(trifluoromethanesulfonyl)imide, N,N-diethyl-N-methyl-N-heptylammonium bis(trifluoromethanesulfonyl)imide, and tri-n-butylmethylammonium bistrifluoromethanesulfonimide; and other ionic liquids such as pyrrolidinium salts, phosphonium salts, and sulfonium salts.

--Surfactants--

Examples of the surfactants include nonionic low molecular surfactants such as glycerin fatty acid esters, polyoxyalkylene alkyl ethers, polyoxyethylene alkyl phenyl ethers, polyoxyethylene alkylamines, polyoxyethylene alkylamine fatty acid esters, and fatty acid diethanolamides; anionic low molecular surfactants such as alkyl sulfonates, alkylbenzene sulfonates, and alkyl phosphates; cationic low molecular surfactants such as tetraalkylammonium salts and trialkylbenzylammonium salts; amphoteric low molecular surfactants such as alkyl betaines and alkylimidazolium betaines; nonionic polymeric surfactants such as a polyether ester amide type, an ethylene oxide-epichlorohydrin type, and a polyether ester type; anionic polymeric surfactants such as a polystyrene sulfonic acid type; cationic polymeric surfactants such as a quaternary ammonium base-containing acrylate polymer type; and amphoteric polymeric surfactants such as amino acid type amphoteric surfactants such as higher alkyl aminopropionates, and betaine type amphoteric surfactants such as higher alkyl dimethyl betaines and higher alkyl dihydroxyethyl betaines.

The amount of the antistatic agent added is not particularly limited but is preferably 0.01 parts by mass or more, more preferably 0.03 parts by mass or more, and particularly preferably 0.05 parts by mass or more and preferably 10 parts by mass or less, more preferably 5 parts by mass or less, and particularly preferably 3 parts by mass or less based on 100 parts by mass of the isocyanate group-terminated urethane prepolymer.

-Leveling Agent-

Examples of the leveling agent include acrylic leveling agents, fluorine-based leveling agents, and silicone-based leveling agents. One leveling agent can be used alone, or two or more leveling agents can be used in combination. Among these, acrylic leveling agents are preferred.

The amount of the leveling agent added is not particularly limited but is preferably 0.001 parts by mass or more, more preferably 0.01 parts by mass or more, and particularly preferably 0.1 parts by mass or more and preferably 2 parts by mass or less, more preferably 1.5 parts by mass or less, and particularly preferably 1 part by mass or less based on 100 parts by mass of the isocyanate group-terminated urethane prepolymer.

-Other Optional Components-

Examples of other optional components include catalysts, other resins other than isocyanate terminated urethane prepolymers, metal powders, colorants (pigments and the like), foil-like materials, conductive agents, silane coupling agents, lubricants, corrosion inhibitors, heat resistance stabilizers, weather resistance stabilizers, polymerization inhibitors, and antifoaming agents.

(Method of Use)

As a method for using the two-component curable urethane adhesive composition, it is acceptable to mix the above main agent and the above curing agent, and use the mixture.

The two-component curable urethane adhesive composition can be cured under conditions of 5 to 90°C and a relative humidity of 5 to 95%, for example. The temperature at the time of mixing is preferably 30°C or higher, more preferably 35°C or higher, and particularly preferably 40°C or higher; and also, is lower than 90°C, more preferably 80°C or lower, and particularly preferably 60°C or lower. When the temperature is within the range, it is easy to suppress side reactions other than the urethane reaction.

(One-Component Curable Urethane Adhesive Composition)

The one-component curable urethane adhesive composition contains the previously described polyether polycarbonate diol, and the previously described polyisocyanate compound or the previously described isocyanate group-terminated urethane prepolymer. The one-component curable urethane adhesive composition can contain the above described additives as needed.

A known method can be applied to the method for producing the one-component curable urethane adhesive composition. Examples thereof include a method of mixing the polyether polycarbonate diol and the polyisocyanate compound; or a method of mixing the polyether polycarbonate diol and the isocyanate group-terminated urethane prepolymer.

For the mixing, a known stirring mixer such as a plastomill, a kneader, a Banbury mixer, or a roll can be used, which is equipped with a heating device. It is preferable to perform the mixing under an atmosphere of an inert gas such as nitrogen gas, or under a reduced-pressure dehydrated atmosphere.

For information, the order of addition of each of the components is not particularly limited.

In addition, in the method for producing a one-component curable urethane adhesive composition, it is also acceptable, for example, to make the polyether polycarbonate diol react with the polyisocyanate compound to obtain an isocyanate group-terminated prepolymer, and then make the prepolymer react with a chain extender. In addition, it is also acceptable to make the prepolymer react with the chain extender, and then further make the resultant with a polyisocyanate compound.

In addition, it is also acceptable to make the polyether polycarbonate diol react with the polyisocyanate compound to obtain a prepolymer having an isocyanate group at the terminal, and further make the prepolymer react with a polyfunctional alcohol; and is also acceptable to further make the polyether polycarbonate diol react with the polyisocyanate compound to obtain a prepolymer having a hydroxyl group at the terminal, and then make the prepolymer react with a polyisocyanate compound.

The chain extender can include linear diols such as ethylene glycol, 1,3-propanediol, 1,4-butanediol, 1,5-pentanediol, 1,6-hexanediol, 1,8-octanediol, 1,9-nonanediol, 1,10-decanediol and 1,12-dodecanediol; diols having a branched chain, such as 2-methyl-1,3-propanediol, 2,2-dimethyl-1,3-propanediol, 2,2-diethyl-1,3-propanediol, 2-methyl-2-propyl-1,3-propanediol, 2,4-heptanediol, 1,4-dimethylolhexane, 2-ethyl-1,3-hexanediol, 2,2,4-trimethyl-1,3-pentanediol, 2-methyl-1,8-octanediol, 2-butyl-2-ethyl-1,3-propanediol, a dimer diol, and neopentyl glycol; diols having an ether group, such as diethylene glycol, triethylene glycol, propylene glycol, dipropylene glycol, and tripropylene glycol; diols having an alicyclic structure, such as 1,4-cyclohexanediol, 1,4-cyclohexanedimethanol, 1,4-dihydroxycyclohexane, and 1,4-dihydroxyethylcyclohexane; diols having an aromatic group, such as xylylene glycol, 1,4-dihydroxyethylbenzene, and 4,4'-methylenebis(hydroxyethyl benzene); polyols such as glycerin, trimethylolpropane, and pentaerythritol; hydroxyamines such as N-methyl ethanolamine and N-ethyl ethanolamine; and polyamines such as ethylenediamine, 1,3-diaminopropane, hexamethylenediamine, triethylenetetramine, diethylenetriamine, isophoronediamine, 4,4'-diaminodicyclohexylmethane, 2-hydroxyethylpropylenediamine, di-2-hydroxyethylethylenediamine, di-2-hydroxyethylpropylenediamine, 2-hydroxypropylethylenediamine, di-2-hydroxypropylethylenediamine, 4,4'-diphenylmethanediamine, methylenebis(o-chloroaniline), xylylenediamine, diphenyldiamine, tolylenediamine, hydrazine, piperazine, and N,N'-diaminopiperazine. These polyols may be used alone, or in combination of two or more types.

Among these polyols, ethylene glycol, propylene glycol, 1,4-butanediol and 1,6-hexanediol are preferable, and 1,4-butanediol is more preferable, from the viewpoint of versatility and reactivity with an isocyanate group.

Examples of the polyfunctional alcohol include ethylene glycol, propylene glycol, 1,4-butanediol, 1,5-pentanediol, 3-methyl-1,5-pentanediol, neopentyl glycol, 1,6-hexanediol, glycerin, trimethylolethane, trimethylolpropane, pentaerythritol, sorbitol, 1,2,6-hexanetriol, diglycerin, dipentaerythritol, polyoxyalkylene glycols having a molecular weight in terms of hydroxyl value of 6000 or less, and polyoxyalkylene triols.

A reaction catalyst may be used when the polyether polycarbonate diol and the polyisocyanate compound are reacted. When a reaction catalyst is used for the reaction between the polyether polycarbonate diol and the polyisocyanate compound, examples of the reaction catalyst include known catalysts for a urethane formation reaction, including:

organotin compounds such as dibutyltin dilaurate, dioctyltin dilaurate, dibutyltin dioctoate, and tin 2-ethylhexanoate; iron compounds such as iron acetylacetonate and ferric chloride; and tertiary amine-based catalysts such as triethylamine or triethylenediamine. These reaction catalysts may be used alone or in combination of two or more types.

Among these reaction catalysts, the organotin compound is preferred from the viewpoint that the reactivity is more satisfactory.

In the case where the reaction catalyst is used when the polyether polycarbonate diol is reacted with the polyisocyanate compound, the amount of the reaction catalyst to be added is not particularly limited, but the amount is preferably 0.00001 to 5 parts by mass, more preferably 0.00005 to 0.1 parts by mass, and particularly preferably 0.0001 to 0.05 parts by mass, based on 100 parts by mass of the polyether polycarbonate diol.

When the amount of the reaction catalyst to be added is 0.00001 parts by mass or more, the reactivity is more excellent, and when the amount is 5 parts by mass or less, impurities derived from the catalyst can be further reduced.

[Polyether Polycarbonate Polymer (A) Having Reactive Silicon Group]

The polyether polycarbonate polymer (A) having a reactive silicon group has a number average molecular weight of 500 to 10000, and has a reactive silicon group represented by the following formula (1).

$$-SiX_aR_{3-a} \qquad \text{Formula (1),}$$

wherein, in the formula (1), X is a halogen atom, a hydroxyl group or a hydrolyzable group; R is a monovalent organic group having 1 to 20 carbon atoms, and contains no hydrolyzable group; a is an integer of 1 to 3; and when a is 1, two R may be the same as or different from each other, and when a is 2 or 3, a plurality of X may be the same as or different from each other.

It is preferable that the polyether polycarbonate polymer (A) having the reactive silicon group be formed by subjecting a polycarbonate diol and a cyclic ether to ring-opening polymerization to obtain a polyether polycarbonate diol which is a ring-opened polymer, converting a hydroxyl group at a terminal of the polyether polycarbonate diol into a group which can react with a silylating agent, and introducing the reactive silicon group by reacting the converted group with the silylating agent, from the viewpoint of further improving the adhesiveness to resin materials. As the cyclic ether, the same compounds as the above can be used, and the preferable embodiments are also the same. In addition, the preferable embodiment of the polyether polycarbonate diol is also the same as the above.

It is preferable that the polyether polycarbonate polymer (A) having the reactive silicon group be a polymer containing the reactive silicon group, a carbonate group and an oxyalkylene group.

It is preferable for the oxyalkylene group in the polyether polycarbonate polymer (A) having the reactive silicon group to be at least one selected from the group consisting of an oxypropylene group and an oxyethylene group, and is more preferable to be an oxypropylene group, from the viewpoint of further improving the adhesiveness to resin materials.

It is preferable for the polyether polycarbonate polymer (A) having the reactive silicon group to have two or more terminal groups in one molecule, and is more preferable to have two terminal groups. It is preferable that the terminal group be at least one group selected from the group consisting of the reactive silicon group represented by the above formula (1), an active hydrogen-containing group, and an isocyanate group.

Examples of the active hydrogen-containing group include a hydroxyl group, a carboxyl group, an amino group, a monovalent functional group obtained by removing one hydrogen atom from a primary amine, a hydrazide group and a mercapto group. Among the groups, the hydroxyl group is preferred.

In the polyether polycarbonate polymer (A) having the reactive silicon group, it is preferable that at least a part of the terminal groups in one molecule be the reactive silicon group represented by the above formula (1), and it is more preferable that the polymer have one or more reactive silicon groups represented by the above formula (1) as the terminal groups.

For information, the polyether polycarbonate polymer (A) having the reactive silicon group may have a reactive silicon group other than the group represented by the above formula (1), but from the viewpoint of improving the tensile properties of the cured product of the curable composition, it is preferable that the reactive silicon group be only the group represented by the above formula (1).

The reactive silicon group represented by the formula (1) is a crosslinking site of the polyether polycarbonate polymer (A) having the reactive silicon group, and can form a crosslinked structure by a siloxane bond.

In the formula (1), X is a halogen atom, a hydroxyl group or a hydrolyzable group. The hydrolyzable group is a group which can form a silanol group (-Si-OH) by hydrolysis, and examples thereof include an alkoxy group, an acyloxy group, a ketoximate group, an amino group, an amide group, an acid amide group, an aminooxy group, a sulfanyl group, and an alkenyloxy group. The number of carbon atoms of the alkyl group or the alkenyl group each of which can be contained in the hydrolyzable group is preferably 1 to 6, and more preferably 1 to 3.

From the viewpoint of mild hydrolyzability, X is preferably an alkoxy group, more preferably an alkoxy group having 1 to 3 carbon atoms, and further preferably a methoxy group, an ethoxy group, or an isopropoxy group. From the viewpoint of promoting the curing by formation of a crosslinked structure by siloxane bonding, a methoxy group or an ethoxy group is particularly preferred.

R is a monovalent organic group having 1 to 20 carbon atoms, and contains no hydrolyzable group. Examples of the organic group include a hydrocarbon group, a halohydrocarbon group, and a triorganosiloxy group; and the number of carbon atoms of the organic group is preferably 1 to 6, and more preferably 1 to 3.

R is preferably an alkyl group, a cycloalkyl group, an aryl group, a 1-chloroalkyl group or a triorganosiloxy group, is more preferably a linear or branched alkyl group having 1 to 4 carbon atoms, a cyclohexyl group, a phenyl group, a benzyl group, a 1-chloroalkyl group, a trimethylsiloxy group, a triethylsiloxy group, or a triphenylsiloxy group, and is further preferably an alkyl group having 1 to 3 carbon atoms or a 1-chloroalkyl group having 1 to 3 carbon atoms. Among these groups, a methyl group or an ethyl group is preferred, from the viewpoint of good curability of the polyether polycarbonate polymer (A) having the reactive silicon group and good stability of the adhesive composition; a 1-chloromethyl group is preferred, from the viewpoint of a good curing speed of the adhesive composition; and a methyl group is preferred, from the viewpoint of availability.

The a is an integer of 1 to 3. When the a is 1, two R may be the same as or different from each other. When the a is 2 or 3, a plurality of X may be the same as or different from each other.

The a is preferably 2 or 3, and more preferably 2.

Examples of the reactive silicon group represented by the formula (1) include a trimethoxysilyl group, a triethoxysilyl group, a triisopropoxysilyl group, a tris(2-propenyloxy)silyl group, a triacetoxysilyl group, a dimethoxymethylsilyl group, a diethoxymethylsilyl group, a dimethoxyethylsilyl group, a diisopropoxymethylsilyl group, a chloromethyldimethoxysilyl group and a chloromethyldiethoxysilyl group. Among these groups, a trimethoxysilyl group, a triethoxysilyl group, a dimethoxymethylsilyl group, or a diethoxymethylsilyl group is preferred, and a dimethoxymethylsilyl group or a trimethoxysilyl group is more preferred, from the viewpoint of tensile properties and mechanical strength of the cured product.

The number of reactive silicon groups in the polyether polycarbonate polymer (A) having the reactive silicon group is preferably more than 0.5, and 6.0 or less, is more preferably 1.2 to 3.8, and is further preferably 1.4 to 2.0 on average per molecule, from the viewpoint of tensile properties and mechanical strength of the cured product.

For information, an average number of the reactive silicon groups per molecule can be calculated by $H^1$-NMR or from the equivalent (molar ratio) of the compound used.

(Molecular Weight)

Mn of the polyether polycarbonate polymer (A) having the reactive silicon group is 500 to 10000, preferably 500 to 5000, more preferably 600 to 4000, and further preferably 800 to 3500. When the Mn is greater than or equal to the lower limit value, the tensile properties and mechanical strength of the cured resin using above polymer become better, and when the Mn is less than or equal to the upper limit value, the adhesiveness to resin materials is better, and the handling becomes easy.

The molecular weight distribution, specifically, Mw/Mn, of the polyether polycarbonate polymer (A) having the reactive silicon group is preferably 1.0 to 3.0, more preferably 1.0 to 2.5, and further preferably 1.0 to 2.0, from the viewpoint of making the adhesive composition have low viscosity and easily handled.

For information, the Mn and Mw of the polyether polycarbonate polymer (A) having the reactive silicon group are values obtained by the same methods as the previously described methods for measuring the Mn and Mw of the polyether polycarbonate diol.

The Mn and Mw/Mn of the polyether polycarbonate polymer (A) having the reactive silicon group can be controlled by the type of catalyst and the polymerization conditions (temperature, stirring conditions, pressure and the like).

When two or more polyether polycarbonate polymers (A) having the reactive silicon group are used, it is preferable that the previously described Mn and Mw/Mn be applied to each of the two or more types.

(Method for Producing Polyether Polycarbonate Polymer (A) Having Reactive Silicon Group)

The polyether polycarbonate polymer (A) having the reactive silicon group can be produced, for example, by a method of reacting the previously described polyether polycarbonate diol with a silylating agent.

A known method can be used as a method of reacting the polyether polycarbonate diol with the silylating agent. Examples of the method include a method (method 1) of subjecting a hydroxyl group in the polyether polycarbonate diol and a silylating agent having an isocyanate group to a urethanization reaction; and a method (method 2) of introducing an isocyanate group into a hydroxyl group of the polyether polycarbonate diol, and then causing a urethanization reaction with the use of a silylating agent having isocyanate-reactive functional group and a reactive silicon group represented by the formula (1).

Examples of the silylating agent having an isocyanate group in the method 1 include an isocyanate silane compound described in JP 2011-178955 A. The examples specifically include 1-isocyanatomethyldimethoxymethyl silane, 1-isocyanatomethyldiethoxyethyl silane, 3-isocyanatopropylmethyldimethoxy silane, 3-isocyanatopropylethyldiethoxy silane, 3-isocyanatopropylmethyldiethoxy silane, 3-isocyanatopropyltrimethoxy silane, 3-isocyanatopropyltriethoxy silane, isocyanatomethyltrimethoxy silane, and isocyanatomethyltriethoxy silane. The silylating agents may be used alone, or in combination of two or more types. Among these silane compounds, 1-isocyanatomethyldimethoxymethyl silane, 3-isocyanatopropylmethyldimethoxy silane, 3-isocyanatopropyltrimethoxy silane and isocyanatomethyltrimethoxy silane are preferred.

It is also preferable that the hydroxyl group of the polyether polycarbonate diol which reacts with the silylating agent having an isocyanate group be a hydroxyl group derived from propylene oxide, from the viewpoint of good reactivity of silylation reaction.

This reaction may be carried out in the presence of a urethanization catalyst. The urethanization catalyst is not particularly limited, and a known urethanization catalyst can be appropriately used. Examples of the catalyst include organic tin compounds such as dibutyltin dilaurate and dioctyltin dilaurate; metal catalysts such as bismuth compounds; and base catalysts such as organic amines. The reaction temperature is preferably 20 to 200°C, and is more preferably 50 to 150°C. In addition, it is preferable that the urethanization reaction be performed under an inert gas atmosphere. Nitrogen is preferred as the inert gas.

The method 2 includes, for example, causing a urethanization reaction by applying a polyisocyanate compound to a hydroxyl group of a polyether polycarbonate diol to introduce an isocyanate group; and then reacting the isocyanate group with a silylating agent having isocyanate-reactive functional group and the reactive silicon group represented by the formula (1). According to this method, two or more urethane bonds and a residue of the silylating agent which has reacted with an isocyanate group are introduced into the terminal of the polyether polycarbonate diol.

Examples of the polyisocyanate compound in the method 2 include aromatic polyisocyanates of naphthalene-1,5-diisocyanate, polyphenylene polymethylene polyisocyanate, 4,4'-diphenylmethane diisocyanate, 2,4-tolylene diisocyanate, 2,6-tolylene diisocyanate, xylylene diisocyanate, and tetramethyl xylylene diisocyanate; aliphatic polyisocyanates of hexamethylene diisocyanate, 2,2,4-trimethyl-hexamethylene diisocyanate, and 2,4,4-trimethyl-hexamethylene diisocyanate; alicyclic polyisocyanates of isophorone diisocyanate, and 4,4'-methylenebis (cyclohexyl isocyanate); and urethane-modified products, biuret-modified products, allophanate-modified products, carbodiimide-modified products, and isocyanurate-modified products, which are obtained from the isocyanate compounds. The polyisocyanate compound may be used alone, or in combination of two or more types. Among these compounds, those having two isocyanate groups are preferred, and hexamethylene diisocyanate, isophorone diisocyanate, 4,4'-diphenylmethane diisocyanate, 2,4-tolylene diisocyanate, and 2,6-tolylene diisocyanate are more preferred.

Examples of the isocyanate-reactive functional group of the silylating agent having isocyanate-reactive functional group and a reactive silicon group represented by the formula (1) in the method 2 include a hydroxyl group, a carboxyl group, a mercapto group, an amino group, and an amino group in which one hydrogen atom is substituted with an alkyl group having 1 to 6 carbon atoms. Among these groups, groups each having one or two active hydrogen atoms are preferred; a hydroxyl group, a mercapto group, an amino group, a methylamino group, an ethylamino group and a butylamino group are preferred; and the hydroxyl group, an amino group, the methylamino group, the ethylamino group and the butylamino group are more preferred.

It is preferable that the isocyanate-reactive functional group be bonded to the reactive silicon group represented by the formula (1), via a divalent organic group having 1 to 20 carbon atoms. The organic group is preferably a divalent hydrocarbon group having 1 to 20 carbon atoms; is more preferably an aromatic hydrocarbon group having 1 to 10 carbon atoms, an aromatic hydrocarbon group having 1 to 10 carbon atoms substituted with an alkyl group having 1 to 4 carbon atoms, an alicyclic hydrocarbon group having 1 to 10 carbon atoms, or a linear hydrocarbon group having 1 to 12 carbon atoms; is further preferably a linear hydrocarbon group having 1 to 8 carbon atoms; and is particularly preferably a linear hydrocarbon group having 1 to 6 carbon atoms.

The number of moles of the reactive silicon group introduced via a urethane bond, based on one mole of hydroxyl groups of the polyether polycarbonate diol, in method 1, and the number of moles of the reactive silicon group introduced via a urethane bond, based on one mole of the hydroxyl group of the polyether polycarbonate diol, in the method 2, specifically, a silylation rate of the polyether polycarbonate polymer (A) having the reactive silicon group is preferably 50 to 100%, more preferably 60 to 100%, further preferably 70 to 100%, and still further preferably 80 to 100%, from the viewpoint that the tensile properties and mechanical strength of the cured resin are better.

The silylation rate can be appropriately adjusted by the amount of the silylating agent to be used and reaction conditions of the silylation reaction.

The silylation rate can be measured by NMR analysis. For information, when the reaction rate of the silylating agent can be regarded as approximately 100%, a calculated value (theoretical value) based on the preparation amounts of the polyether polycarbonate diol and the silylating agent can also be used as a value of the silylation rate.

In the methods 1 and 2, when the preparation amount of the silylating agent is one mole, based on one mole of the group which can introduce the reactive silicon group at the terminal of the polyether polycarbonate diol, and when the silylation rate is 100%, the number of the reactive silicon group per terminal group in the polyether polycarbonate diol is 1.

A content of the polyether polycarbonate polymer (A) having the reactive silicon group in the adhesive composition is preferably 10 to 80% by mass, more preferably 12 to 70% by mass, and further preferably 15 to 60% by mass, based on a total amount of the adhesive composition, from the viewpoint that the adhesiveness to the substrate material, and the tensile properties and mechanical strength of the cured product are better.

[Oxyalkylene Polymer (B)]

When the adhesive composition of the present invention contains the polyether polycarbonate polymer (A) having the reactive silicon group, it is preferable that the adhesive composition further contain an oxyalkylene polymer (B), from the viewpoint of further improving the tensile properties and mechanical strength of the cured product.

The oxyalkylene polymer (B) has two or more terminal groups, and has the reactive silicon group represented by the formula (1). The oxyalkylene polymer (B) has no carbonate group.

In the adhesive composition, a reactive silicon group contained in the oxyalkylene polymer (B) may be the same as or different from a reactive silicon group contained in the polyether polycarbonate polymer (A) having the reactive silicon group.

The oxyalkylene polymer (B) may be used alone, or in combination of two or more types.

The oxyalkylene polymer (B) can be produced by a method of reacting a precursor polymer (b) having a terminal group which can introduce a reactive silicon group, with a silylating agent.

The terminal groups of the precursor polymer (b) are each independently preferably an unsaturated group or an active hydrogen-containing group.

Examples of the unsaturated group include a vinyl group ($CH_2$=CH-) and an ethynyl group (CH≡C-), and the unsaturated group are preferably an allyl group ($CH_2$=CH-$CH_2$-), an acryloyl group ($CH_2$=CH-C(=O)-), a methacryloyl group ($CH_2$=C($CH_3$)-C(=O)-), a methallyl group ($CH_2$=C($CH_3$)-$CH_2$-), and a propargyl group (CH≡C-$CH_2$-), more preferably an allyl group.

Examples of the active hydrogen-containing group include a hydroxyl group, a carboxyl group, an amino group, a monovalent functional group obtained by removing one hydrogen atom from a primary amine, a hydrazide group, and a mercapto group.

The precursor polymer (b) is preferably a polymer obtained by subjecting an alkylene oxide to addition polymerization with an initiator having two or more active hydrogen-containing groups. In other words, the oxyalkylene polymer (B) and the precursor polymer (b) contain units based on the alkylene oxide.

The precursor polymer (b) is preferably a precursor polymer (b1) which contains a polyoxyalkylene chain and has two or more active hydrogen-containing groups as terminal groups, or a precursor polymer (b2) which contains a polyoxyalkylene chain and has two or more unsaturated groups as terminal groups.

The polymer precursor (b1) can be produced by subjecting an alkylene oxide to ring-opening addition polymerization with an initiator having two or more active hydrogen-containing groups, in the presence of a catalyst.

The active hydrogen-containing group of the initiator is preferably a hydroxyl group. Examples of the initiator include ethylene glycol, diethylene glycol, propylene glycol, dipropylene glycol, neopentyl glycol, 1,4-butanediol, 1,6-hexanediol, polypropylene glycol having a molecular weight in terms of hydroxyl value of 50 to 8000, glycerin, polyoxypropylenetriol having a molecular weight in terms of hydroxyl value of 50 to 8000, trimethylolethane, trimethylolpropane, pentaerythritol, sorbitol, 1,2,6-hexanetriol, diglycerin, and dipentaerythritol. The initiator may be used alone, or in combination of two or more types.

Examples of the alkylene oxide (cyclic ether) and the catalyst to be used in the ring-opening addition polymerization include the cyclic ether and the catalyst which have been described above in the description of the production of the polyether polycarbonate diol. The cyclic ethers and catalysts to be used in the production of the precursor polymer (b1) may be the same as or different from those which have been used in the production of the polyether polycarbonate diol.

The precursor polymer (b2) is obtained by a method of reacting a compound having a functional group which can react with an active hydrogen-containing group and having an unsaturated group, with the precursor polymer (b1) to introduce the unsaturated group via an ether bond, a urethane bond or the like. **In** addition, when the terminal group of the precursor polymer (b1) is a hydroxyl group, the precursor polymer (b1) can be produced by a known method of converting the hydroxyl group into a metaloxy group to form an alcoholate, and then reacting the resultant with an unsaturated group-containing halogenated hydrocarbon such as allyl chloride, methallyl chloride, or propargyl bromide. Alternatively, the precursor polymer (b1) can also be produced by a known method of converting the hydroxyl group of the precursor polymer (b1) into an metaloxy group to form an alcoholate, then reacting the resultant with an epoxy compound which has an unsaturated group such as allyl glycidyl ether, and then reacting the resultant with a halogenated hydrocarbon containing an unsaturated group.

A method of obtaining the oxyalkylene polymer (B) by introducing the reactive silicon group into the active hydrogen-containing group at the terminal of the precursor polymer (b1) can be the same as the method for introducing the reactive silicon group into the hydroxyl group at the terminal of the polyether polycarbonate diol. In addition, examples of a method of obtaining the oxyalkylene polymer (B) by introducing a reactive silicon group into the unsaturated group at the terminal of the precursor polymer (b2) include a method (method 3) of reacting the precursor polymer (b2) having an unsaturated group at the terminal, with a silylating agent which can cause an addition reaction with the unsaturated group.

Examples of the silylating agent which can cause the addition reaction with the unsaturated group in the method 3 include a hydrosilane compound (for example, $HSiX_aR_{3-a}$ (X, R and a are the same as those in the formula (1))), and a compound having a reactive silicon group and a mercapto group. Specifically, examples of the silylating agent include trimethoxysilane, triethoxysilane, triisopropoxysilane, tris(2-propenyloxy)silane, triacetoxysilane, dimethoxymethylsilane, diethoxymethylsilane, dimethoxyethylsilane, diisopropoxymethylsilane, ($\alpha$-chloromethyl)dimethoxysilane, ($\alpha$-chloromethyl)diethoxysilane, 3-mercaptopropylmethyldimethoxysilane, and 3-mercaptopropyltrimethoxysilane. The silylating agents may be used alone, or in combination of two or more types. Among these silylating agents, trimethoxysilane, triethoxysilane, dimethoxymethylsilane, and diethoxymethylsilane are preferred, and dimethoxymethylsilane or trimethoxysilane is more preferred, from the viewpoint that high reactivity and good curability can be obtained.

A ratio of a reactive silicon group which has been introduced into an unsaturated group or an active hydrogen-containing group of a terminal group of the precursor polymer (b), in other words, a silylation rate of the oxyalkylene polymer (B) is preferably 50 to 100%, more preferably 55 to 100%, and further preferably 60 to 100%, from the viewpoint that the tensile properties and the mechanical strength of the cured product are better.

Mn of the oxyalkylene polymer (B) is preferably 5000 to 50000, more preferably 10000 to 40000, and further preferably 12000 to 30000, from the viewpoint of the viscosity at which the adhesive composition is easily handled.

The Mw/Mn of the oxyalkylene polymer (B) is preferably 1.0 to 1.8, more preferably 1.0 to 1.7, and further preferably 1.0 to 1.5, from the viewpoint of the viscosity at which the adhesive composition is easily handled.

For information, Mn and Mw of the oxyalkylene polymer (B) are values obtained by the same method as the previously described method of measuring Mn and Mw of the polyether polycarbonate polymer (A) having the reactive silicon group.

The oxyalkylene polymer (B) has, for example, an unsaturated group, an active hydrogen-containing group, or an isocyanate group, as a terminal group other than the reactive silicon group represented by the formula (1). Examples and preferred embodiments of the unsaturated group and the active hydrogen-containing group are as described above.

When the adhesive composition of the present invention contains the polyether polycarbonate polymer (A) having the reactive silicon group, the adhesive composition may contain other components in addition to the oxyalkylene polymer (B) which is contained as needed. As other components, known additives can be applied according to the use of the adhesive composition, and examples thereof include a tackifier, a curing catalyst, a filler, a plasticizer, a thixotropic agent, an antioxidant, an ultraviolet absorber, a light stabilizer, a dehydrating agent, an adhesiveness promoter, an amine compound, an oxygen-curable compound, a photocurable compound, an epoxy compound, an acrylic compound, and acrylic silicon. Each of these components may be used in combination of two or more types. For example, known compounds described in WO 2013/180203, WO 2014/192842, WO 2016/002907, JP 2014-88481 A, JP 2015-10162 A, JP 2015-105293 A, JP 2017-039728 A and JP 2017-214541 A can be used in appropriate combination. Other components are blended within such a range as not to hinder the effect of the present invention.

Examples of the acrylic silicone include a vinyl polymer having the reactive silicon group represented by the formula (1) in the molecule. The reactive silicon group of the acrylic silicon may be introduced into a terminal of the main chain, may be introduced into a side chain, or may be introduced into both the terminals of the main chain and the side chain. The average number of reactive silicon groups per molecule of the acrylic silicone is preferably 0.8 or more. From the viewpoint of breaking strength, the number is preferably 1.0 or more, and more preferably 1.2 or more. From the viewpoint that the breaking elongation becomes good, the number is preferably 4.0 or less, and more preferably 3.0 or less. As a monomer constituting the main chain of the acrylic silicone, for example, conventionally known monomers described in JP 1991-14068 B, JP 1994-211922 A and JP 1999-130931 A can be used. Examples of the monomer containing a reactive silicon group and an unsaturated group to be copolymerized with the above monomer include vinyldimethoxymethylsilane, vinyldiethoxymethylsilane, vinylmethyldichlorosilane, vinyltrimethoxysilane, vinyltriethoxysilane, vinyltrichlorosilane, tris(2-methoxyethoxy)vinylsilane, 3-(dimethoxymethylsilyl)propyl(meth)acrylate, 3-(trimethoxysilyl)propyl(meth)acrylate, 3-(triethoxysilyl)propyl(meth)acrylate. These compounds may be used alone, or may be used in combination with one or more other types.

Examples of the polymerization method include a polymerization method with the use of a radical polymerization initiator by solution polymerization, emulsion polymerization, suspension polymerization or bulk polymerization; and living radical polymerization. Examples of the living radical polymerization method include a method of using a cobalt porphyrin complex as described in Journal of American Chemical Society (J. Am. Chem. Soc.), 1994, vol. 116, p. 7943; a method of using a nitroxide radical as described in JP 2003-500378 A; and atom transfer radical polymerization (Atom Transfer Radical Polymerization: ATRP method) of using an organic halide, a halogenated sulphonyl compound or the like as an initiator, and using a transition-metal complex as a catalyst as described in JP 1999-130931 A. The polymer obtained by the living radical polymerization tends to have a narrow molecular weight distribution and to be low viscosity.

In addition, in order to enhance the adhesiveness to a polyolefin substrate material, a chlorinated polyolefin (for example, SUPERCLON 814HS, produced by Nippon Paper Industries Co., Ltd.) or the like may be added, and thereby, the adhesiveness can be further enhanced. When the chlorinated polyolefin is added, it is preferable to use acrylic silicon in combination from the viewpoint of compatibility.

When the adhesive composition contains the oxyalkylene polymer (B), the content thereof is preferably 20 to 90% by mass, more preferably 25 to 80% by mass, and further preferably 30 to 70% by mass, based on the total amount of the adhesive composition, from the viewpoint that the tensile properties and mechanical strength of the cured product are better. When the adhesive composition contains the polyether polycarbonate polymer (A) having the reactive silicon group and the oxyalkylene polymer (B), the content of the oxyalkylene polymer (B) is preferably 5 to 90% by mass, more preferably 25 to 80% by mass, and further preferably 30 to 70% by mass, based on the total amount of the polyether polycarbonate polymer (A) having the reactive silicon group and the oxyalkylene polymer (B), from the viewpoint of further improving the adhesiveness to resin materials.

It is preferable that the adhesive composition contain a curing catalyst for promoting crosslinking by formation of a siloxane bond based on the reactive silicon group. When the curing catalyst is contained in the adhesive composition, the content thereof is preferably 0.1 to 10 parts by mass, more preferably from 0.2 to 6 parts by mass, and further preferably from 0.5 to 4 parts by mass, based on 100 parts by mass of the polyether polycarbonate polymer (A) having the reactive silicon group, from the viewpoint of obtaining a more uniform cured product by appropriately promoting crosslinking.

The adhesive composition may be a one-component type of previously blending all the components, hermetically sealing and storing the composition, and curing the composition by moisture in the air after execution; or alternatively, may also be a two-component type of separately storing a main agent composition which contains the polyether polycarbonate polymer (A) having the reactive silicon group and the oxyalkylene polymer (B) which is contained as needed, and a curing agent composition which contains a curing catalyst, and mixing the curing agent composition with the main agent composition before use. From the viewpoint of ease of execution, the one-component type is preferred.

In the case of the one-component type, it is preferable that the adhesive composition should not contain water. It is preferable that the blended components containing water be dehydrated in advance by drying, or dehydrated by pressure reduction or the like during the mixing and kneading.

In the case of the two-component type, it is difficult for the main agent composition to be gelled even when the composition contains a small amount of water, but it is preferable to dehydrate and dry the blended components in advance, from the viewpoint of good storage stability.

From the viewpoint of the good storage stability, a dehydrating agent may be added to the one-component adhesive composition and a two-component main agent composition.

The adhesive composition of the present invention is excellent in the adhesiveness to resin materials, and therefore can be used for adhesion between resin materials, and adhesion between a resin material and glass, rubber or metal.

<Article>

An article of the present invention includes a first substrate material, a cured product of the above described adhesive composition, and a second substrate material in this order; and at least one of the first substrate material and the second substrate material is formed from a resin material.

Fig. 1 is a cross-sectional view showing one embodiment of an article of the present invention. In the article 10 of Fig. 1, a cured product (adhesive layer) 2 of the adhesive composition is provided on a first substrate material 1, and a second substrate material 3 is provided on the adhesive layer 2. At least one of the first substrate material 1 and the second substrate material 3 is formed from a resin material. When the first main substrate material 1 is formed from a resin material, the second substrate material 3 may be a substrate material formed from a resin material or a substrate material formed from a material other than the resin material. Examples of the material other than the resin material include glass and metal.

In addition, it is preferable that at least one of the first substrate material 1 and the second substrate material 3 be plasma-treated on the surface on the adhesive layer 2 side, and both the surfaces of the first substrate material 1 on the adhesive layer 2 side and the surface of the second substrate material 3 on the adhesive layer 2 side may be plasma-treated.

It is preferable that both the first substrate material and the second substrate material be formed from a resin material, from the viewpoint of further exhibiting the effect of the present invention.

Examples of the resin material constituting the first substrate material and the second substrate material include polyolefins of polypropylene, polyethylene, an ethylene•propylene copolymer, and cycloolefin polymer; polyesters of polyethylene terephthalate, and polybutylene terephthalate; polymethyl methacrylate; polycarbonate; polystyrene; an acrylonitrile•styrene copolymer; polyvinyl chloride; polyacetate; an acrylonitrile•butadiene• styrene copolymer; and polyamides. The resin materials may be used alone, or may be used in combination of one or more other types.

The resin material is preferably polyolefin, and more preferably polypropylene, from the viewpoint of versatility and weight reduction.

It is preferable that the surface of at least one of the first substrate material and the second substrate material be plasma-treated, and is more preferable that both the surface of the first substrate material and the surface of the second substrate material be plasma-treated, from the viewpoint of further exhibiting the effect of the present invention.

It is presumed that due to the plasma treatment of the surface of the substrate material, the functional group generated on the surface of the substrate material and the carbonate group contained in the polymer in the adhesive composition of the present invention are bonded to each other, and thereby the adhesiveness to the substrate material (resin material) becomes more excellent.

In addition, the adhesive composition of the present invention is excellent in the adhesiveness to resin materials, and therefore can exhibit excellent adhesiveness without forming a primer on the surface of the substrate material formed from the resin material.

The plasma treatment is a method of surface treatment by plasma discharge.

The plasma treatment is not particularly limited, and examples thereof include atmospheric pressure plasma treatment and vacuum plasma treatment.

A plasma gas (process gas) to be used in the plasma treatment is not particularly limited, and examples thereof include nitrogen gas, helium gas, argon gas, and mixed gases in which these gases are mixed with one or more of oxygen gas, carbon dioxide gas and hydrogen gas.

It is preferable for the speed of the plasma treatment to be 10 to 1500 mm/sec, and is more preferable to be 50 to 1000 mm/sec.

When the plasma treatment is performed with the use of a plasma discharge nozzle, the gap between the plasma discharge nozzle and the surface of the substrate material is preferably 1 to 100 mm, and more preferably 5 to 50 mm.

The thicknesses of the first substrate material and the second substrate material are both preferably 0.5 to 20 mm, and more preferably 1 to 15 mm.

The method for applying the adhesive composition of the present invention onto the first substrate material is not particularly limited, and the examples of the method include a dip coating method; a coating method with the use of a double roll coater, a slit coater, an air knife coater, a wire bar coater, a slide hopper, spray coating, a blade coater, a doctor coater, a squeeze coater, a reverse roll coater, a transfer roll coater, an extrusion coater, a curtain coater, a dip coater, a die coater or a gravure roll; and a screen printing method, a spray coating method, a spin coating method and an inkjet method.

The thickness of the adhesive layer to be formed is not particularly limited, but is preferably 0.1 to 10 mm.

By bonding the second substrate material onto the adhesive composition applied onto the first substrate material, an article is obtained which has the first substrate material, the above described cured product of the adhesive composition, and the second substrate material in this order.

The method for bonding the second substrate material onto the adhesive composition is not particularly limited, and examples thereof include a pressure bonding method. For information, it is acceptable to perform heating treatment or the like after the second substrate material has been bonded, in order to cure the adhesive composition.

The article of the present invention is excellent in the adhesiveness, and therefore is suitable for interior and exterior parts of automobiles such as automobile bodies, front doors, rear doors, back doors, front bumpers, rear bumpers, and rocker moldings.

Examples

The present invention will be described in detail below based on Examples, but the present invention is not limited to the following Examples, and various modifications can be made without departing from the gist of the present invention.

(Evaluation Method)

[Number Of Hydroxyl Groups Per Molecule]

The number of hydroxyl groups per molecule is determined to be the number of hydroxyl groups of the initiator.

[Hydroxyl Value]

The hydroxyl value (OHV) of the polyether polycarbonate diols (a1) and (a2) (hereinafter, also simply referred to as diols (a1) and (a2)), polyoxyalkylene diols (b1) and (b2) (hereinafter, also simply referred to as diols (b1) and (b2)), and polyols (c1), which were obtained in Synthesis Examples that would be described below, were measured in accordance with the method of "JIS K 1557: 2007.

[number average molecular Weight (Mn) And Molecular Weight Distribution (Mw/Mn) Of Polyether Polycarbonate Diols (a1) And (a2), Polyoxyalkylene Diols (b1) And (b2), Polymers A1, A2, B1 And B2, And Isocyanate Group-Terminated Urethane Prepolymer P1]

The number average molecular weight (Mn) and weight average molecular weight (Mw) of the diols (a1), (a2), (b1) and (b2), the polymers A1, A2, B1 and B2, and the isocyanate group-terminated urethane prepolymer P1, which were obtained in Synthesis Examples that would be described below, were analyzed with the use of gel permeation chromatography (GPC) (HLC-8320GPC, manufactured by Tosoh Techno-System Inc.) and an RI detector. Two columns of TSK-GEL SuperHZ4000 (4.6 mm ×150 mm) and two columns of SuperHZ2500 (4.6 mm ×150 mm) were connected in series in this order and used as the columns. Each sample was measured with the use of tetrahydrofuran as an eluent at a flow rate of 0.35 ml/min and at a column temperature of 40°C, the obtained spectrum was analyzed with the use of a calibration curve which was prepared with the use of a standard polystyrene sample having a known molecular weight, and thereby Mn and Mw were calculated. In other words, Mn and Mw of the diols (a1), (a2), (b1) and (b2) are molecular weights conversion using polystyrene standard, and the molecular weight distribution (Mw/Mn) is a value calculated from the Mw and Mn.

[Content Of Carbonate Group in Polyether Polycarbonate Diol]

The content of carbonate group in the polyether polycarbonate diol ($G_{(PCD+PO)}$, % by mass) was calculated from the following formula 1.

$$G_{(PCD+PO)} = (A \times 60)/(Mn_{(PCD+PO)}) \times 100 \quad \dots \quad \text{Formula 1}$$

For information, the symbols in the formula 1 have the following meanings, and "60" is a formula weight per carbonate group which exists in one molecule of the polycarbonate diol of an initiator.

A: the number of carbonate groups in one molecule of the polycarbonate diol of the initiator.
$G_{(PCD+PO)}$: content ratio (% by mass) of carbonate group in polyether polycarbonate diol.
$Mn_{(PCD+PO)}$: Mn of polyether polycarbonate diol.

[Viscosity]

Viscosities (unit: mPa·s) at 25°C of diols (a1), (a2), (b1) and (b2), and polyols (c1), which were obtained in Synthesis Examples that would be described later, were measured with an E-type viscosimeter (product name: VISCOMETER TV-22, manufactured by Toki Sangyo Co., Ltd.).

[Silylation Rate]

The silylation rate was defined as the equivalent (molar ratio) of the silylating agent used based on the amount of hydroxyl groups which were the terminal groups of the polyether polycarbonate diol or polyoxyalkylene diol.

[Average Number of Reactive Silicon Groups Per Molecule]

The average number of reactive silicon groups per molecule was calculated by multiplication of the number of terminal groups of the polyether polycarbonate diol or polyoxyalkylene diol by the silylation rate.

[Synthesis of Polyether Polycarbonate Diol]

(Synthesis Example 1)

A polycarbonate diol (product name: PH-50, produced by UBE Corporation, hydroxyl value: 218.6 mgKOH/g, Mw/Mn = 1.80, Mn=600, composition ratio of 1,5-BD / 1,6-HD = 50/50 (molar ratio)) was used as an initiator, which was derived from 1,5-pentanediol (1,5-PD) and 1,6-hexanediol (1,6-HD) that are two types of diol compounds.
Based on 100 parts by mass of the initiator, 0.02 parts by mass of a zinc hexacyanocobaltate complex having t-butyl alcohol as a ligand (hereinafter referred to as "TBA-DMC catalyst") was used as a ring-opening polymerization catalyst, 100 parts by mass of propylene oxide (PO) of a cyclic ether was subjected to ring-opening addition polymerization at 130°C, and the polyether polycarbonate diol (a1) was obtained that was a transparent liquid in which Mn was 1370, Mw/Mn was 1.28, viscosity (25°C) was 827 mPa·s, hydroxyl value was 112.8 mgKOH/g, content of carbonate group was 18% by mass, and hydroxyl groups per molecule were two.

(Synthesis Example 2)

Based on 100 parts by mass of Polycarbonate diol (product name: PH-50, produced by UBE Corporation) which was an initiator, a 0.04 parts by mass of the TBA-DMC catalyst was used as a ring-opening polymerization catalyst, then 300 parts by mass of propylene oxide (PO) of a cyclic ether was subjected to ring-opening addition polymerization at 130°C, and the polyether polycarbonate diol (a2) was obtained that was a transparent liquid in which Mn was 2800, Mw/Mn was 1.11, viscosity (25°C) was 873 mPa·s, hydroxyl value was 56.8 mgKOH/g, content of carbonate group was 9% by mass, and hydroxyl groups per molecule were two.

[Synthesis of Polyoxyalkylene Diol]

(Synthesis Example 3)

A polyoxypropylene diol in an amount of 400 g was used as an initiator, which was obtained by ring-opening polymerization of propylene oxide by propylene glycol and had a molecular weight of 400 in terms of hydroxyl value, 600 g of propylene oxide (PO) was subjected to ring-opening addition polymerization in the presence of potassium hydroxide, and thereby a polyoxyalkylene diol (b1) was obtained that had two hydroxyl groups per molecule and was a transparent liquid in which Mn was 1280, Mw/Mn was 1.04, viscosity (25°C) was 150 mPa·s, hydroxyl value was 111.0 mgKOH/g, and hydroxyl groups per molecule were two.

(Synthesis Example 4)

A polyoxypropylene diol in an amount of 167 g was used as an initiator, which was obtained by ring-opening polymerization of propylene oxide by propylene glycol and had a molecular weight of 2000 in terms of hydroxyl value, the TBA-DMC catalyst was used, and 833 g of propylene oxide (PO) was polymerized; and thereby a polyoxyalkylene diol (b2) was obtained that had two hydroxyl groups per molecule and was a transparent liquid in which Mn was 16980, Mw/Mn was 1.05, viscosity (25°C) was 7000 mPa·s, hydroxyl value was 9.4 mgKOH/g, and hydroxyl groups per molecule were two.
The aspects of the diols (a1), (a2), (b1) and (b2) which were produced in the above Synthesis Examples 1 to 4 are shown in the following Table 1.

[Table 1]

| Synthesis Example | Diol | Number of hydroxyl groups per molecule | Hydroxyl value (mgKOH/g) | Number average molecular weight (Mn) | Molecular weight distribution (Mw/Mn) | Content of carbonate group (% by mass) | Viscosity at 25°C (mPa·s) |
|---|---|---|---|---|---|---|---|
| 1 | (a1) | 2 | 112.8 | 1370 | 1.28 | 18 | 827 |
| 2 | (a2) | 2 | 56.8 | 2800 | 1.11 | 9 | 873 |
| 3 | (b1) | 2 | 111.0 | 1280 | 1.04 | 0 | 150 |
| 4 | (b2) | 2 | 9.4 | 16980 | 1.05 | 0 | 7000 |

[Synthesis of Isocyanate Group-Terminated Urethane Prepolymer] (Synthesis Example 5)
A polyisocyanate compound (Millionate MT produced by Tosoh Corporation, monomeric MDI, and isocyanate group content of 33.5% by mass) in an amount of 113.4 g was added to a reaction container equipped with a thermometer, a stirrer, and a cooling tube. Next, 140 g of polyether polyol (EXCENOL5030, produced by AGC Inc., a polyoxypropylene polymer using glycerin as an initiator) and 420 g of polyether polyol (EXCENOL-2020, produced by AGC Inc., polyoxypropylene polymer using propyleneglycol as initiator) were added thereto, then, the temperature was gradually raised, the resultant was reacted at an internal temperature of about 80°C for about 4 hours, and an isocyanate group-terminated urethane prepolymer P1 (Mn=24000, and Mw/Mn=1.85) was obtained in which the isocyanate group content including the terminal was 2.6% by mass.
In the following examples, example 1 and example 3 are Examples, and example 2 is a Comparative Example.

[Example 1]

(Preparation Of Main Agent)

To a reaction container, 60 g of the isocyanate group-terminated urethane prepolymer P1 obtained in the above, 20 g of carbodiimide-modified MDI (Millionate MTL, produced by Tosoh Corporation, and isocyanate group content of 28.9% by mass), 10 g of a plasticizer (DINP: diisononyl phthalate, produced by J-Plus Co., Ltd.) and 20 g of calcium carbonate (NS #400, produced by Nitto Funka Kogyo K.K.) of a filler were charged, then, the resultant was stirred with the use of a stirrer (vacuum stirring defoaming mixer: V-mini300, manufactured by EME, Inc.) for 10 minutes at 1400 rpm/min, and a main agent 1 was obtained.

(Production and Evaluation of Two-Component Curable Urethane Adhesive Composition)

The main agent 1 was charged into a cartridge 1. On the other hand, 10.0 g of a polyol (c1) and 36.3 g of a diol (a1) which were synthesized by the following procedure and were curing agents, 0.2 g of triethylenediamine (TEDA; produced by Junsei Chemical Co., Ltd.) which was a catalyst, and 43.5 g of calcium carbonate (NS #400, produced by Nitto Funka Kogyo K.K.) which was a filler were put into a reaction container; and the mixture prepared by stirring the mixture for 10 minutes at 1400 rpm/min with the use of a stirrer (vacuum stirring defoaming mixer: V-mini300, manufactured by EME, Inc.) was charged into a cartridge 2.

The cartridges 1 and 2 were set in an extrusion gun, a mixing nozzle was attached to the tip, the mixture was extruded onto a release film so that a ratio (mass ratio) of the discharge amount from the cartridge 1 to the discharge amount from the cartridge 2 became 1: 1; the resultant was stretched to a thickness of about 200 $\mu$m, and the resultant was allowed to stand for 72 hours in an atmosphere at a temperature of 23°C and a relative humidity of 50%; and a sheet-like cured product was produced.

Here, a value which was obtained by multiplying the number of isocyanate groups in the isocyanate group-terminated urethane prepolymer P1 by 100, based on the mean number of hydroxyl groups in the polyols (c1) and the diols (a1), was defined as an isocyanate index of the two-component curable urethane adhesive composition. A ratio of the discharge amount of the cartridge 1 to that of the cartridge 2 can be changed by changing the diameter of the cartridge 2 as appropriate.

(Synthesis of Polyol (c1))

As for a polyol (c1), 470 g of propyleneoxide (PO) was polymerized with the use of 120 g of ethylene diamine as an initiator, then 410 g of ethyleneoxide (EO) was further polymerized in the presence of potassium hydroxide, the neutralized salt was removed, and polyoxyalkylene polyol (c1) was obtained which had EO units in a block form and was a transparent liquid in which viscosity (25°C) was 1300 mPa·s, hydroxyl value was 451.0 mgKOH/g, content of EO units was 41% by mass, and hydroxyl groups per molecule were 4.

[Gelation Time]

In the same manner as in the above, the cartridges 1 and 2 were filled with the main agent and the curing agent, and the mixing nozzle was set at the tip of each extrusion gun to discharge the main agent and the curing agent. A loss tangent (tan$\delta$) of the obtained adhesive composition was measured with the use of MCR301 (manufactured by Anton Paar GmbH) under conditions of a nitrogen atmosphere, a temperature of 25°C, a cone radius of 25 mm, and a frequency of 1 Hz; and the gelation time was determined as the time when tan$\delta$ became 1, starting from the time when the adhesive composition was discharged from the mixing nozzle.

[Strength and Elongation at break]

The obtained sheet-like cured product was subjected to measurement of tensile strength (unit: MPa) and elongation (unit: %) at break with the use of a Tensilon tester (manufactured by A&D Company, Limited, product name: RTG-13 10) at a tensile speed of 50 mm/min, according to JIS K 7312: 1996.

[Tensile Shear Test]

The main agent and the curing agent were mixed with planetary stirrers, respectively, and the resultants were inserted into predetermined cartridges, respectively. A glass fiber-reinforced polypropylene test piece (manufactured by Standard-testpiece com.) was prepared which had a length of 100 mm × width of 25 mm × thickness of 3 mm, and of which the surface was wiped with isopropyl alcohol, and dried; two sheets of adhesive tapes each having a thickness of 500 $\mu$m were attached to one of the surfaces, so as to be perpendicular to the side of the tip portion of the test piece and to have a width of 12.5 mm; and the resultant test piece was subjected to the following plasma treatment. The main agent and the curing agent were applied to the plasma-treated surface of the glass fiber-reinforced polypropylene test piece so that a ratio (mass ratio) of a discharge amount of the main agent to a discharge amount of the curing agent becomes 3:4; and the plasma-treated surface of the glass fiber-reinforced polypropylene test piece was placed on the coated surface, and was pressure-bonded to the adhesive composition so that the adhesive composition had a length of 25 mm × width of 12.5 mm × thickness of 500 $\mu$m. After that, the resultant was cured by being aged in an atmosphere at a temperature of 23°C and a relative humidity of 50%, for 7 days, and a test piece was obtained. The obtained test piece was subjected to a tensile shear test with the use of a Tensilon tester (manufactured by A&D Company, Limited, product name: RTG 1310) at a temperature of 23°C and a tensile speed of 5 mm/min according to JIS K 6850: 1999, and the maximum point stress (Tmax, unit: N/mm$^2$) was measured as the maximum value of the tensile shear stress.

In addition, the peeled surface of the test piece after the shear test was visually observed, and a ratio of an area of a layer of the cured product which was peeled off due to the cohesive failure in the whole peeled surface was calculated, and was defined as a cohesive failure rate (%).

For information, the larger the value of the cohesive failure rate is, the more excellent the adhesiveness is.

(Plasma Treatment)

One surface of the glass fiber-reinforced polypropylene test piece was subjected to plasma treatment under the following conditions. A contact angle of the treated surface of the test piece was measured, and it was confirmed that the contact angle decreased as compared to that before treatment.

- Name of apparatus: PS-1200AW manufactured by Wedge co., Ltd.
- Gas type: air
- Distance from head to substrate material: 10 mm
- Number of passes: once
- Treatment speed: 40 mm/second or 160 mm/second

[Example 2 and Example 3]

The two-component curable urethane adhesive compositions of example 2 and example 3 were produced in the same procedure as in example 1, except that the types and blended amounts of the components used in the curing agent were changed as shown in Table 2.

Table 2 shows the evaluation results of the isocyanate index, the physical properties of the cured product (gelation time, breaking strength, and breaking elongation), and the tensile shear test (Tmax, cohesive failure rate) of each of the two-component curable urethane adhesive compositions.

[Table 2]

| Blending [parts by mass] | | Example 1 | Example 2 | Example 3 |
|---|---|---|---|---|
| Main agent | main agent 1 | 90.0 | 90.0 | 90.0 |
| Curing agent | Diol (a1) | 36.3 | - | - |
| | Diol (a2) | - | - | 72.1 |
| | Diol (b1) | - | 36.9 | - |
| | Polyol (c1) | 10.0 | 10.0 | 10.0 |
| | Triethylenediamine | 0.2 | 0.06 | 0.2 |
| | Calcium carbonate | 43.5 | 43.0 | 37.7 |
| Isocyanate index | | 110 | 109.8 | 109.8 |
| Mean number of hydroxyl groups | | 2.7 | 2.7 | 2.7 |
| Mix ratio (main agent/curing agent) | | 1/1 | 1/1 | 3/4 |

(continued)

| Blending [parts by mass] | | | Example 1 | Example 2 | Example 3 |
|---|---|---|---|---|---|
| Cured product physical property | Gel time | Minutes | 22 | 26 | 22 |
| | Strength at break | MPa | 3.32 | 2.77 | 2.18 |
| | Elongation at break | % | 173 | 123 | 143 |
| Tensile shear test (plasma treatment speed 160 mm/sec) | Tmax | N/mm$^2$ | 1.20 | 1.19 | 1.20 |
| | Cohesive failure rate | % | 20 | 5 | 10 |

It was recognized that the adhesive compositions of example 1 and example 3 had a higher cohesive failure rate and were excellent in adhesiveness to resin materials compared to the adhesive composition of example 2. In addition, it is understood that the cured products of the adhesive compositions of example 1 and example 3 are excellent in the strength and the elongation at break.

[Synthesis of Polymer]

(Synthesis Example 6)

The inside of a reaction vessel containing the diol (a1) which was obtained in Synthesis Example 1 was replaced with nitrogen, and 3-isocyanatopropyltrimethoxysilane was charged thereto while the internal temperature was maintained at 50°C so that a ratio of isocyanate groups became 0.97 (NCO/OH molar ratio) based on 1 mole of hydroxyl groups in the diol (a1); and a bismuth (III) 2-ethylhexanoate-2-ethylhexanoic acid solution (produced by Fujifilm Wako Pure Chemical Corporation) was charged thereto as a catalyst. The liquid temperature was raised to 80°C and kept at the temperature, while the liquid was stirred. The liquid was analyzed with a Fourier-transform infrared spectrophotometer, and the reaction was continued until the completion of the reaction between the hydroxyl group and the isocyanate group was confirmed; and a polyether polycarbonate polymer (polymer A1) was obtained in which a urethane bond was introduced into the main chain and a trimethoxysilyl group was introduced into the terminal group. As a storage stabilizing agent, 0.06 parts by mass of 3-mercaptopropyltrimethoxysilane (KBM-803, produced by Shin-Etsu Chemical Co., Ltd.) was added, based on 100 parts by mass of the polymer A1, and a composition containing the polymer A1 was obtained.

(Synthesis Example 7)

In the same way as in Synthesis Example 6, except that the diol (a2) obtained in Synthesis Example 2 was used, a polyether polycarbonate polymer (polymer A2) was obtained in which a urethane bond was introduced into the main chain and a trimethoxysilyl group was introduced into the terminal group. As a storage stabilizing agent, 0.06 parts by mass of 3-mercaptopropyltrimethoxysilane (KBM-803, produced by Shin-Etsu Chemical Co., Ltd.) was added, based on 100 parts by mass of the polymer A2, and a composition containing the polymer A2 was obtained.

(Synthesis Example 8)

In the same way as in Synthesis Example 6, except that the diol (b1) obtained in Synthesis Example 3 was used, a polyoxypropylene polymer (polymer B1) was obtained in which a urethane bond was introduced into the main chain and a trimethoxysilyl group was introduced into the terminal group. As a storage stabilizing agent, 0.06 parts by mass of 3-mercaptopropyltrimethoxysilane (KBM-803, produced by Shin-Etsu Chemical Co., Ltd.) was added, based on 100 parts by mass of the polymer B1, and a composition containing the polymer B1 was obtained.

(Synthesis Example 9)

In the same way as in Synthesis Example 6, except that the diol (b2) obtained in Synthesis Example 4 was used, a polyoxypropylene polymer (polymer B2) was obtained in which a urethane bond was introduced into the main chain and a trimethoxysilyl group was introduced into the terminal group. As a storage stabilizing agent, 0.06 parts by mass of 3-mercaptopropyltrimethoxysilane (KBM-803, produced by Shin-Etsu Chemical Co., Ltd.) was added, based on 100 parts by mass of the polymer B2, and a composition containing the polymer B2 was obtained.

The aspects of the polymers produced in the above Synthesis Examples 6 to 9 are shown in the following Table 3.

[Table 3]

| Synthesis Example | Polymer | Number of terminal group | Number average molecular weight (Mn) | Molecular weight distribution (Mw/Mn) | Silylation rate (%) | Average number of reactive silicon groups per molecule |
|---|---|---|---|---|---|---|
| 6 | A1 | 2.0 | 2280 | 1.36 | 97 | 1.94 |
| 7 | A2 | 2.0 | 3616 | 1.55 | 97 | 1.94 |
| 8 | B1 | 2.0 | 2171 | 1.18 | 97 | 1.94 |
| 9 | B2 | 2.0 | 19604 | 1.04 | 97 | 1.94 |

[Preparation of Adhesive Composition]

Adhesive compositions were prepared with the use of the compositions which contain each of the polymers produced in the above Synthesis Examples, and various additives.

The additives used are shown below.

(Filler)

- Hakuenka CCR: Colloidal calcium carbonate, product name of Shiraishi Calcium Kaisha, Ltd.

- Whiton (registered trademark) SB: Heavy calcium carbonate, product name of Shiraishi Calcium Kaisha, Ltd.

(Dehydrating Agent)

- KBM-1003: vinyltrimethoxysilane, product name of Shin-Etsu Chemical Co., Ltd.

(Adhesion promoter)

- KBM-403: 3-glycidyloxypropyltrimethoxysilane, product name of Shin-Etsu Chemical Co., Ltd.

- KBM-603: 3-(2-aminoethylamino) propyltrimethoxysilane, product name of Shin-Etsu Chemical Co., Ltd.

(Curing catalyst)

- Neostann (registered trademark) U-830: dioctyltin versatate, product name of Nitto Kasei Co., Ltd.

In the following examples, example 4, example 7, example 8 and example 10 are Examples, and example 5, example 6 and example 9 are Comparative Examples.

(Examples 4 to 10)

Adhesive compositions were prepared by addition of additives and the compositions containing polymers in the blended amounts (parts by mass) shown in Tables 4 to 6, and by mixing with a planetary stirrer. The blended amount of each component shown in Tables 4 to 6 is a value (unit: parts by mass) based on 100 parts by mass of the polymer. The obtained adhesive composition was used and subjected to a tensile shear test. The results are shown in Tables 4 to 6.

[Tensile Shear Test]

A polypropylene test piece (manufactured by Engineering Test Service Co., Ltd.) having a length of 100 mm × width of 25 mm × thickness of 2 mm, and of which the surface was wiped with isopropyl alcohol, and dried; and a glass fiber-reinforced polypropylene test piece (manufactured by Standard Test Piece Co., Ltd.) having a length of 100 mm × width of 25 mm × thickness of 3 mm were prepared; and one of the surfaces of each test piece was subjected to the surface treatment under the above described plasma treatment conditions. A spacer having a thickness of 1 mm was arranged between two test pieces in accordance with JIS K 6850: 1999; the adhesive compositions of examples 4 to 10 were applied to one of the surfaces (plasma-treated surfaces) of the test pieces so as to have a length of 25 mm × width of 25 mm × thickness of 1 mm, respectively; the test pieces were bonded to the other test pieces having plasma-treated surfaces, respectively, and pressure-bonded; and thereby test specimens were produced. The prepared test specimen was aged for 7 days in an atmosphere at a temperature of 23°C and a relative humidity of 50%; then, the spacer was removed; the resultant test specimen was further aged and cured for 7 days in an atmosphere at a temperature of 50°C and a relative humidity of 65%; and a test piece was obtained.

Each test piece was subjected to a tensile shear test with a Tensilon tester (at a temperature of 23°C, and a tensile speed of 5 mm/min). At this time, the maximum point stress (Tmax, unit: $N/mm^2$) was measured as the maximum value of the tensile shear stress, and the elongation at the maximum stress (Emax, unit: mm) was measured. In addition, the peeled surface of the test piece after the shear test was visually observed, and a ratio of an area of a layer of the cured product (adhesive layer) which was peeled off due to the cohesive failure in the whole peeled surface was calculated, and was defined as a cohesive failure rate (%). The ratio of the area in which the adhesive layer was peeled at the interface and the resin did not remain on the test piece to the whole peeled surface was calculated, and was defined as an adhesive failure rate (%). Furthermore, the ratio of the area was calculated in which the adhesive remained very thinly on the surface of the test piece and the resin was broken and peeled off, and was defined as a thin layer cohesive failure rate (%).

For information, the larger the value of the cohesive failure rate is, the more excellent the adhesiveness is. The smaller the value of the adhesive failure rate is, the more excellent the adhesiveness is.

[Table 4]

| Blending [parts by mass] | | | Example 4 | Example 5 |
|---|---|---|---|---|
| Polymer | Polymer A1 | | 100 | - |
| | Polymer A2 | | - | - |
| | Polymer B1 | | - | 100 |
| | Polymer B2 | | - | - |
| Storage stabilizing agent | KBM-803 | | 0.06 | 0.06 |
| Filler | Hakuenka CCR | | 50 | 50 |
| | Whiton (registered trademark) SB | | 30 | 30 |
| Dehydrating agent | KBM-1003 | | 5 | 5 |
| Adhesiveness promoter | KBM-403 | | 1 | 1 |
| | KBM-603 | | 3 | 3 |
| Curing catalyst | Neostann (registered trademark) U-830 | | 1 | 1 |
| Tensile shear test [glass fiber reinforced polypropylene test piece] | | | | |
| Plasma treatment speed 40 mm/sec | Tmax | $N/mm^2$ | 1.20 | 1.03 |
| | Emax | mm | 1.91 | 1.65 |
| | Cohesive failure rate | % | 10 | 5 |
| | Thin layer cohesive failure rate | % | 40 | 25 |
| | Adhesive failure rate | % | 50 | 70 |

(continued)

| Tensile shear test [glass fiber reinforced polypropylene test piece] | | | | |
|---|---|---|---|---|
| Plasma treatment speed 160 mm/sec | Tmax | N/mm$^2$ | 1.03 | 1.00 |
| | Emax | mm | 1.85 | 1.70 |
| | Cohesive failure rate | % | 10 | 5 |
| | Thin layer cohesive failure rate | % | 40 | 25 |
| | Adhesive failure rate | % | 50 | 70 |

The adhesive composition of example 4 had a higher cohesive failure rate and a lower adhesive failure rate than the adhesive composition of example 5, and was therefore recognized to have excellent adhesiveness to resin materials.

[Table 5]

| Blending [parts by mass] | | Example 6 | Example 7 | Example 8 |
|---|---|---|---|---|
| Polymer | Polymer A1 | - | - | 30 |
| | Polymer A2 | - | 30 | - |
| | Polymer B1 | 30 | - | - |
| | Polymer B2 | 70 | 70 | 70 |
| Storage stabilizing agent | KBM-803 | 0.06 | 0.06 | 0.06 |
| Filler | Hakuenka CCR | 50 | 50 | 50 |
| | Whiton (registered trademark) SB | 30 | 30 | 30 |
| Dehydrating agent | KBM-1003 | 5 | 5 | 5 |
| Adhesiveness promoter | KBM-403 | 1 | 1 | 1 |
| | KBM-603 | 3 | 3 | 3 |
| Curing catalyst | Neostann (registered trademark) U-830 | 1 | 1 | 1 |
| Tensile shear test [glass fiber reinforced polypropylene test piece] | | | | |
| Plasma treatment speed 160 mm/sec | Tmax | N/mm$^2$ | 1.67 | 1.26 | 1.75 |
| | Emax | mm | 3.54 | 3.19 | 3.37 |
| | Cohesive failure rate | % | 30 | 60 | 70 |
| | Thin layer cohesive failure rate | % | 60 | 30 | 30 |
| | Adhesive failure rate | % | 10 | 10 | 0 |

The adhesive compositions of example 7 and example 8 had a higher cohesive failure rate and an equal or lower adhesive failure rate as compared to the adhesive composition of example 6, and was therefore recognized to have excellent adhesiveness to resin materials.

[Table 6]

| Blending [parts by mass] | | Example 9 | Example 10 |
|---|---|---|---|
| Polymer | Polymer A1 | - | 30 |
| | Polymer A2 | - | - |
| | Polymer B1 | 30 | - |
| | Polymer B2 | 70 | 70 |
| Storage stabilizing agent | KBM-803 | 0.06 | 0.06 |

(continued)

| Blending [parts by mass] | | | Example 9 | Example 10 |
|---|---|---|---|---|
| Filler | Hakuenka CCR | | 50 | 50 |
| | Whiton (registered trademark) SB | | 30 | 30 |
| Dehydrating agent | KBM-1003 | | 5 | 5 |
| Adhesiveness promoter | KBM-403 | | 1 | 1 |
| | KBM-603 | | 3 | 3 |
| Curing catalyst | Neostann (registered trademark) U-830 | | 1 | 1 |
| Tensile shear test [polypropylene test piece] | | | | |
| Plasma treatment speed 40 mm/sec | Tmax | N/mm$^2$ | 1.43 | 1.60 |
| | Emax | mm | 3.65 | 4.08 |
| | Cohesive failure rate | % | 40 | 70 |
| | Thin layer cohesive failure rate | % | 40 | 25 |
| | Adhesive failure rate | % | 20 | 5 |
| Plasma treatment speed 160 mm/sec | Tmax | N/mm$^2$ | 1.04 | 1.38 |
| | Emax | mm | 2.57 | 3.57 |
| | Cohesive failure rate | % | 20 | 60 |
| | Thin layer cohesive failure rate | % | 15 | 20 |
| | Adhesive failure rate | % | 65 | 20 |

The adhesive composition of example 10 had a higher cohesive failure rate and a lower adhesive failure rate than the adhesive composition of example 9, and was therefore recognized to have excellent adhesiveness to resin materials.

Reference Signs List

10 article

1 first substrate material

2 cured product of adhesive composition (adhesive layer)

3 second substrate material

**Claims**

1. An adhesive composition comprising a polyether polycarbonate diol that has a number average molecular weight of 500 to 10000, and has no reactive silicon group represented by the following formula (1), or a polyether polycarbonate polymer (A) having the reactive silicon group represented by the following formula (1): -S

$$iX_aR_{3-a} \qquad \text{Formula (1)},$$

wherein, in the formula (1), X is a halogen atom, a hydroxyl group or a hydrolyzable group; R is a monovalent organic group having 1 to 20 carbon atoms, and contains no hydrolyzable group; a is an integer of 1 to 3; and when a is 1, two R may be the same as or different from each other, and when a is 2 or 3, a plurality of X may be the same as or different from each other.

2. The adhesive composition according to claim 1, comprising: a main agent containing an isocyanate group-terminated urethane prepolymer; and a curing agent containing the polyether polycarbonate diol that has no reactive silicon group represented by the formula (1).

3. The adhesive composition according to claim 2, wherein the polyether polycarbonate diol that has no reactive silicon group represented by the formula (1) is a ring-opened polymer of a polycarbonate diol and a cyclic ether, and has carbonate group and oxyalkylene group, and the polycarbonate diol is a condensate of two or more alcohols and a carbonate compound.

4. The adhesive composition according to claim 3, wherein a content of the carbonate group in the polyether polycarbonate diol that has no reactive silicon group represented by the formula (1) is 5% by mass or more based on 100% by mass of a total of the carbonate group and the oxyalkylene group.

5. The adhesive composition according to claim 3, wherein the oxyalkylene group in the polyether polycarbonate diol that has no reactive silicon group represented by the formula (1) is at least one selected from the group consisting of oxypropylene group and oxyethylene group.

6. The adhesive composition according to claim 2, wherein the polyether polycarbonate diol that has no reactive silicon group represented by the formula (1) is a compound represented by the following formula (2):

$$HO\text{-}(R^1O)_s\text{-}(R^2\text{-}O\text{-}C(=O)\text{-}O)_u\text{-}R^{20}\text{-}(OR^1)_t\text{-}OH \qquad \text{Formula (2),}$$

wherein, in the formula (2), $R^1$ is an alkylene group having 2 to 4 carbon atoms; $R^2$ and $R^{20}$ are each a chain hydrocarbon group having 3 to 20 carbon atoms or a cyclic hydrocarbon group having a ring structure that has carbon atoms of 6 to 20; these groups may have one or more substituent groups, when being a cyclic hydrocarbon group, may contain an oxygen atom as an atom constituting the ring, and when containing an oxygen atom, adjacent atoms are simultaneously not an oxygen atom; and s and t are each a repeating number, u is a repeating number of 2 or more, and $(R^2\text{-}O\text{-}C(=O)\text{-}O)_u$ includes two or more units represented by $(R^2\text{-}O\text{-}C(=O)\text{-}O)$.

7. The adhesive composition according to claim 1, wherein the polyether polycarbonate polymer (A) having the reactive silicon group represented by the formula (1) has two or more terminal groups in one molecule; and the terminal group is at least one group selected from the group consisting of the reactive silicon group represented by the formula (1), an active hydrogen-containing group, and an isocyanate group.

8. The adhesive composition according to claim 7, wherein the polyether polycarbonate polymer (A) having the reactive silicon group represented by the formula (1) has a number average molecular weight of 800 to 3500.

9. The adhesive composition according to claim 7, further comprising an oxyalkylene polymer (B).

10. The adhesive composition according to claim 9, wherein the oxyalkylene polymer (B) has a number average molecular weight of 5000 to 50000.

11. An article comprising a first substrate material, a cured product of the adhesive composition according to claim 1, and a second substrate material in this order, wherein
at least one of the first substrate material and the second substrate material is formed from a resin material.

12. The article according to claim 11, wherein the resin material is a polyolefin.

13. The article according to claim 11, wherein the resin material is polypropylene.

14. The article according to claim 11, wherein a surface of at least one of the first substrate material and the second substrate material is plasma-treated, which is in contact with the cured product of the adhesive composition.

[Fig. 1]

## INTERNATIONAL SEARCH REPORT

| | International application No. |
|---|---|
| | **PCT/JP2023/017825** |

### A. CLASSIFICATION OF SUBJECT MATTER

***C09J 169/00***(2006.01)i; ***B32B 27/00***(2006.01)i; ***B32B 27/26***(2006.01)i; ***B32B 27/40***(2006.01)i; ***C08G 64/00***(2006.01)i;
***C08G 65/28***(2006.01)i; ***C08G 65/336***(2006.01)i; ***C09J 171/02***(2006.01)i
FI:  C09J169/00; C09J171/02; C08G65/28; C08G65/336; B32B27/00 D; B32B27/40; B32B27/26; C08G64/00

According to International Patent Classification (IPC) or to both national classification and IPC

### B. FIELDS SEARCHED

Minimum documentation searched (classification system followed by classification symbols)

C09J1/00-201/10; B32B27/00; B32B27/26; B32B27/40; C08G64/00-64/42; C08G65/00-65/48

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2018-528997 A (REPSOL. S. A.) 04 October 2018 (2018-10-04) | 1, 11-14 |
| | claims 1, 13, paragraphs [0058], [0133]-[0135], [0145]-[0151], tables 2, 4-5 | |
| A | | 2-6 |
| A | JP 2013-527281 A (BAYER INTELLECTUAL PROPERTY GMBH) 27 June 2013 (2013-06-27) | 1-6, 11-14 |
| | claims 1, 11-13, paragraph [0039], example 1 | |
| A | CN 114133908 A (ZIBO SHANGZHENG NEW MATERIAL TECHNOLOGY CO., LTD.) 04 March 2022 (2022-03-04) | 1-6, 11-14 |
| | claim 1, paragraphs [0025]-[0027], example 1 | |
| A | JP 2013-533328 A (HENKEL CORPORATION) 22 August 2013 (2013-08-22) | 1-6, 11-14 |
| | claims 1, 10-11, paragraphs [0052]-[0059], examples 1-3 | |
| X | JP 2021-59722 A (AGC INC) 15 April 2021 (2021-04-15) | 1, 7 |
| | claims 1, 10, paragraphs [0059]-[0062], tables 1-3 | |
| A | | 8-10 |

☑ Further documents are listed in the continuation of Box C.    ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **07 July 2023** | **18 July 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

35

<table>
<tr><td colspan="2" align="center"><strong>INTERNATIONAL SEARCH REPORT</strong></td><td>International application No.<br><br><strong>PCT/JP2023/017825</strong></td></tr>
</table>

**C.    DOCUMENTS CONSIDERED TO BE RELEVANT**

| Category* | Citation of document, with indication, where appropriate, of the relevant passages | Relevant to claim No. |
|---|---|---|
| X | US 2017/0313816 A1 (COVESTRO DEUTSCHLAND AG) 02 November 2017 (2017-11-02)<br>claim 1, paragraph [0259] | 1, 7-8 |
| A | | 9-10 |
| A | JP 2019-502781 A (EVONIK DEGUSSA GMBH) 31 January 2019 (2019-01-31)<br>claims 1, 13, paragraphs [0027], [0115] | 1, 7-10 |
| A | JP 5-239202 A (ENICHEM SINTESI SPA) 17 September 1993 (1993-09-17)<br>claims 1, 13, p. 7, right column, lines 12-42, table 10, examples 33-36 | 1, 7-10 |

Form PCT/ISA/210 (second sheet) (January 2015)

## INTERNATIONAL SEARCH REPORT

| International application No. |
|---|
| **PCT/JP2023/017825** |

| Box No. III | Observations where unity of invention is lacking (Continuation of item 3 of first sheet) |
|---|---|

This International Searching Authority found multiple inventions in this international application, as follows:

(Invention 1) Claims 1-6, and 11-14

Document 1 discloses a feature corresponding to an "adhesive composition containing polyether polycarbonate diol having a number average molecular weight of 500-10,000 and having no reactive silicon group represented by formula (1)," and containing polyether polycarbonate diol having no reactive silicon group among the options in claim 1 lacks novelty in light of document 1, and thus does not have a special technical feature.

However, claim 2 dependent on claim 1 has the special technical feature of "including a main agent containing an isocyanate group-terminal urethane prepolymer, and a curing agent containing polyether polycarbonate diol having no reactive silicon group represented by formula (1)." In addition, claims 3-6 also have the same technical feature as claim 2.

Accordingly, containing polyether polycarbonate diol having no reactive silicon group in claim 1 and claims 2-6 and 11-14 are classified as invention 1.

(Invention 2) Claims 1 and 7-10

Containing a polyether polycarbonate polymer having a reactive silicon group among the options in claim 1 cannot be said to have technical features identical or corresponding to containing polyether polycarbonate diol having no reactive silicon group among the options in claim 1 classified as invention 1 and claim 2.

In addition, containing a polyether polycarbonate polymer having a reactive silicon group among the options in claim 1 is not substantially identical to or similarly closely related to any of the claims classified as invention 1.

Therefore, containing a polyether polycarbonate polymer having a reactive silicon group among the options in claim 1 cannot be classified as invention 1.

In addition, containing a polyether polycarbonate polymer having a reactive silicon group among the options in claim 1 and claims 7-10 have the special technical feature of "containing a polyether polycarbonate polymer having a reactive silicon group," and are thus classified as invention 2.

1. ☐ As all required additional search fees were timely paid by the applicant, this international search report covers all searchable claims.

2. ☑ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**
☐ The additional search fees were accompanied by the applicant's protest and, where applicable, the payment of a protest fee.
☐ The additional search fees were accompanied by the applicant's protest but the applicable protest fee was not paid within the time limit specified in the invitation.
☐ No protest accompanied the payment of additional search fees.

Form PCT/ISA/210 (continuation of first sheet) (January 2015)

**INTERNATIONAL SEARCH REPORT**
Information on patent family members

International application No.

**PCT/JP2023/017825**

| Patent document cited in search report | | | Publication date (day/month/year) | Patent family member(s) | | | Publication date (day/month/year) |
|---|---|---|---|---|---|---|---|
| JP | 2018-528997 | A | 04 October 2018 | US | 2018/0230267 | A1 | |
| | | | | claims 1, 13, paragraphs [0110], [0251]-[0253], [0267]-[0270], tables 2, 4-5 | | | |
| | | | | WO | 2017/021448 | A1 | |
| | | | | EP | 3331936 | A1 | |
| | | | | AR | 105598 | A | |
| | | | | CA | 2994402 | A | |
| | | | | CN | 107922604 | A | |
| | | | | KR | 10-2018-0037025 | A | |
| | | | | MX | 2018001453 | A | |
| | | | | PT | 3331936 | T | |
| | | | | ES | 2796342 | T | |
| JP | 2013-527281 | A | 27 June 2013 | US | 2013/0059973 | A1 | |
| | | | | claims 15, 25-27, example 1 | | | |
| | | | | WO | 2011/138274 | A1 | |
| | | | | EP | 2566906 | A1 | |
| | | | | DE | 102010019504 | A | |
| | | | | CN | 102906141 | A | |
| | | | | ES | 2747399 | T | |
| CN | 114133908 | A | 04 March 2022 | (Family: none) | | | |
| JP | 2013-533328 | A | 22 August 2013 | US | 2013/0078473 | A1 | |
| | | | | claims 1, 10-11, examples 1-3 | | | |
| | | | | WO | 2011/146252 | A2 | |
| | | | | EP | 2571951 | A1 | |
| | | | | CN | 103097484 | A | |
| | | | | KR | 10-2013-0086152 | A | |
| | | | | ES | 2594752 | T | |
| | | | | BR | 112012029126 | A | |
| JP | 2021-59722 | A | 15 April 2021 | (Family: none) | | | |
| US | 2017/0313816 | A1 | 02 November 2017 | WO | 2016/046110 | A1 | |
| | | | | EP | 3197935 | A1 | |
| | | | | CN | 107075105 | A | |
| | | | | ES | 2713623 | T | |
| JP | 2019-502781 | A | 31 January 2019 | US | 2018/0305596 | A1 | |
| | | | | claims 1, 12-13, paragraphs [0050], [0156] | | | |
| | | | | WO | 2017/089068 | A1 | |
| | | | | EP | 3380542 | A1 | |
| | | | | TW | 201731915 | A | |
| | | | | CN | 108291020 | A | |
| JP | 5-239202 | A | 17 September 1993 | US | 5288839 | A | |
| | | | | claim 1, examples 33-36, table 6 | | | |
| | | | | EP | 533275 | A2 | |
| | | | | DE | 69227969 | C | |
| | | | | IT | MI912457 | A | |
| | | | | AT | 174940 | T | |
| | | | | IT | MI912457 | D | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021059722 A
- JP 2021155705 A
- JP 2020037689 A
- JP 2011178955 A
- WO 2013180203 A
- WO 2014192842 A
- WO 2016002907 A
- JP 2014088481 A
- JP 2015010162 A
- JP 2015105293 A
- JP 2017039728 A
- JP 2017214541 A
- JP 3014068 B
- JP 6211922 A
- JP 11130931 A
- JP 2003500378 A

**Non-patent literature cited in the description**

- *J. Am. Chem. Soc.*, 1994, vol. 116, 7943